# EUROPEAN PATENT SPECIFICATION

(11) **EP 3 621 303 B1**
(45) Date of publication and mention of the grant of the patent: **28.02.2024**
(21) Application number: 18793898.0
(22) Date of filing: 26.04.2018
(51) Int. Cl.: H04N 19/107, H04N 19/147, H04N 19/176

(54) **PROCESSING METHOD AND DEVICE FOR VIDEO ENCODING, AND STORAGE MEDIUM**
VERARBEITUNGSVERFAHREN UND VORRICHTUNG ZUR VIDEOCODIERUNG UND SPEICHERMEDIUM
PROCÉDÉ ET DISPOSITIF DE TRAITEMENT D'ENCODAGE VIDÉO, ET SUPPORT DE STOCKAGE

(30) Priority: 03.05.2017 CN 201710305306
(43) Date of publication of application: 11.03.2020
(73) Proprietor: Tencent Technology (Shenzhen) Company Limited, Shenzhen, Guangdong, 518057 (CN)
(72) Inventor: MAO, Xunan, Shenzhen Guangdong 518057 (CN)
(74) Representative: Eisenführ Speiser
(86) International application number: PCT/CN2018/084563
(87) International publication number: WO 2018/201954

(56) References cited:
- CN-A- 101 562 750
- CN-A- 104 902 271
- CN-A- 105 933 717
- KR-A- 20080 035 390
- US-A1- 2017 094 283
- WU T K CHIEW K P LIM J Y THAM Z ZHOU INSTITUTE FOR INFOCOMM RESEARCH (SINGAPORE) D ET AL: "A fast and quality-preserving method for H.264 encoding using dynamic SAD maps", VISUAL COMMUNICATIONS AND IMAGE PROCESSING; 30-1-2007 - 1-2-2007; SAN JOSE,, 30 January 2007 (2007-01-30), XP030081154,
- JAMIL-UR-REHMAN ET AL: "Fast Intra Prediction Mode Decision by Adaptively Selecting Fewer Number of Modes", MACHINE LEARNING AND CYBERNETICS, 2007 INTERNATIONAL CONFERENCE ON, IEEE, PI, 1 August 2007 (2007-08-01), pages 2385-2389, XP031154211, ISBN: 978-1-4244-0972-3
- FENG CHEN ET AL: "A low-complexity rate-distortion model for motion estimation in H.263", PROCEEDINGS OF THE INTERNATIONAL CONFERENCE ON IMAGE PROCESSING (ICIP) LAUSANNE, SEPT. 16 - 19, 1996; [PROCEEDINGS OF THE INTERNATIONAL CONFERENCE ON IMAGE PROCESSING (ICIP)], NEW YORK, IEEE, US, vol. 1, 16 September 1996 (1996-09-16), pages 517-520, XP010202708, DOI: 10.1109/ICIP.1996.560905 ISBN: 978-0-7803-3259-1
- CHEN-KUO CHIANG ET AL: "Fast H.264 Encoding Based on Statistical Learning", IEEE TRANSACTIONS ON CIRCUITS AND SYSTEMS FOR VIDEO TECHNOLOGY, INSTITUTE OF ELECTRICAL AND ELECTRONICS ENGINEERS, US, vol. 21, no. 9, 1 September 2011 (2011-09-01), pages 1304-1315, XP011351954, ISSN: 1051-8215, DOI: 10.1109/TCSVT.2011.2147250

## Description

### FIELD

This application relates to the field of video coding technologies, and more specifically, to a video coding processing method and apparatus and a storage medium.

### BACKGROUND

As the volume of video data increases, video compression technologies have become the key to optimizing transmission and storage of the video data.

The video compression technologies (such as the H.26x series) are mainly used for compressing a video by eliminating redundancy in a video signal, among which a predictive coding technology is more commonly used. In a predictive coding process, each frame of a video is divided into multiple macro blocks (MBs), and then predictive coding is performed on each macro block. Coding schemes involved in the predictive coding are mainly classified into intra-frame predictive coding and inter-frame predictive coding.
"A fast and quality-preserving method for H.264 encoding using dynamic SAD maps" by D. Wu et al. (Institute for Infocomm Research (Singapore), VISUAL COMMUNICATIONS AND IMAGE PROCESSING; 30-1-2007 - 1-2-2007; SAN JOSE, 30 January 2007, XP030081154) discloses: by calculating the cost function involving the Lagrangian multiplier, H.264 encoder will choose the mode that gives the lowest cost as the final coding mode of a macroblock. Specifically, the mode decision process endeavors to minimize the Lagrangian cost J according to an equation J=D+λ*R, where the distortion D measures the difference between the original signal value and its predicted value, R indicates the number of bits used to represent the information of a particular mode, the Lagrangian multiplier λ is used to vary the relative weight of the tradeoff between D and R. "Fast Intra Prediction Mode Decision by Adaptively Selecting Fewer Number of Modes" by JAMIL-UR-REHMAN et al. (MACHINE LEARNING AND CYBERNETICS, 2007 INTERNATIONAL CONFERENCE ON, IEEE, PI, 1 AUGUST 2007, pages 2385-2389, XP031154211) discloses finding the optimum intra prediction mode by minimizing Lagrangian Functional, and based on the correlation between the current and neighboring partitions, the encoder and decoder calculate, for each current block, the minimum of the prediction modes of neighboring blocks.

### SUMMARY

A video coding processing method is provided according to an embodiment of the present disclosure. The video coding processing method is applied to an electronic device, and includes:
determining a to-be-coded macroblock in a to-be-coded video frame;
obtaining an inter-frame coding cost of the to-be-coded macroblock by using at least one inter-frame coding mode, the number of the at least one inter-frame coding mode being less than the total number of inter-frame coding modes, the coding cost corresponding to the at least one inter-frame coding mode being prediction error information obtained by using a coded video frame and the to-be-coded video frame;
obtaining an intra-frame coding cost of the to-be-coded macroblock by using at least one intra-frame coding mode, the number of the at least one intra-frame coding mode being less than the total number of intra-frame coding modes, the coding cost corresponding to the at least one intra-frame coding mode being prediction error information obtained by using a coded macroblock in the to-be-coded video frame and the to-be-coded video frame;
comparing the inter-frame coding cost with the intra-frame coding cost, to obtain a comparison result;
determining a coding scheme of the to-be-coded macroblock based on the comparison result, the coding scheme including intra-frame predictive coding and inter-frame predictive coding; and
coding the to-be-coded macroblock according to the coding scheme, wherein
the determining a coding scheme of the to-be-coded macroblock based on the comparison result comprises:
   obtaining coding schemes of K neighboring coded macroblocks of the to-be-coded macroblock, wherein K is a positive integer,
   obtaining, based on the comparison result and the coding schemes of the K neighboring coded macroblocks, a probability of performing the intra-frame predictive coding on the to-be-coded macroblock and a probability of performing the inter-frame predictive coding on the to-be-coded macroblock, comprising:
      in a case that the comparison result indicates that the intra-frame coding cost is greater than A multiplied by the inter-frame coding cost, setting the probability of the inter-frame predictive coding to a first preset value , and determining the probability of the intra-frame predictive coding based on a location of the to-be-coded macroblock in the to-be-coded video frame and the coding schemes of the K neighboring coded macroblocks, wherein A is a coefficient greater than a first value, and the first value is greater than or equal to 1, and
      in a case that the comparison result indicates that the inter-frame coding cost is greater than B multiplied by the intra-frame coding cost, setting the probability of the intra-frame predictive coding to a second preset value, and determining the probability of the inter-frame predictive coding based on a location of the to-be-coded macroblock in the to-be-coded video frame and the coding schemes of the K neighboring coded macroblocks, wherein B is a coefficient greater than a second value, and the second value is greater than or equal to 1,
   determining the coding scheme of the to-be-coded macroblock based on the probability of the intra-frame predictive coding and the probability of the inter-frame predictive coding.

A video coding processing apparatus is provided according to an embodiment of the present disclosure, which includes:
a processor and a memory connected to the processor, the memory storing machine-readable instructions executable to the processor, and the processor executing the machine-readable instructions to perform the above method.

A non-volatile computer-readable storage medium is provided according to an embodiment of the present disclosure. The storage medium stores machine-readable instructions, and the machine-readable instructions is executed by a processor to perform the above method.

### BRIEF DESCRIPTION OF THE DRAWINGS

To describe the technical solutions in the embodiments of this disclosure more clearly, the following briefly describes the accompanying drawings required for describing the embodiments. Apparently, the accompanying drawings in the following descriptions show merely some embodiments of the present disclosure, and a person of ordinary skill in the art may still derive other drawings from these accompanying drawings without creative efforts.
FIG. 1A is a schematic diagram of an implementation environment of a video coding processing method according to an embodiment of the present disclosure;
FIG. 1B is a flowchart of a video coding processing method according to an embodiment of the present disclosure;
FIG. 2 is a schematic diagram of a to-be-coded video frame according to an embodiment of the present disclosure;
FIG. 3 is a schematic diagram of a process of coding a to-be-coded macroblock in different cases according to an embodiment of the present disclosure;
FIG. 4 is a schematic diagram of a process of coding a to-be-coded macroblock in different cases according to an embodiment of the present disclosure;
FIG. 5 is a flowchart of a method for determining a to-be-coded macroblock in a to-be-coded video frame according to an embodiment of the present disclosure;
FIG. 6 is a schematic structural diagram of a video coding processing apparatus according to an embodiment of the present disclosure; and
FIG. 7 is a schematic structural diagram of an electronic device according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, the described embodiments are some embodiments of the present disclosure rather than all of the embodiments. All other embodiments obtained by a person of ordinary skill in the art based on the embodiments of the present disclosure without creative efforts shall fall within the protection scope of the present disclosure.

In predictive coding technologies, one or more signals are used to predict a next signal based on the association between discrete signals, and a difference (a prediction error) between an actual value and a predicted value is coded. Currently, intra-frame predictive coding and inter-frame predictive coding are performed in a process of performing predictive coding on a to-be-coded macroblock. In the intra-frame predictive coding, prediction is performed by using a pixel value in a same frame, and then a prediction error is quantized and coded. In the inter-frame predictive coding, prediction is performed by using a pixel value in a neighboring frame, and then a prediction error is quantized and coded.

In the inter-frame predictive coding, methods for segmenting or sub-segmenting to obtain macroblocks or sub-macroblocks of different sizes may be used, and multiple inter-frame coding modes for different macroblock sizes are supported. For example, macroblocks of 16×16, 16×8, 8× 16, or 8×8 may be obtained by segmentation, and an 8×8 macroblock may be sub-segmented into sub-macroblocks of 8×4, 4×8, or 4×4. Macroblocks obtained by different segmentation manners correspond to different inter-frame coding modes. In a process of performing the inter-frame predictive coding, a coding cost of each inter-frame coding mode needs to be calculated. A higher coding cost indicates a higher bit rate (the number of data bits transmitted per unit time during data transmission) required for achieving the same video quality.

In the intra-frame predictive coding, methods for segmenting or sub-segmenting to obtain macroblocks or sub-macroblocks of different sizes may also be used, and multiple intra-frame coding modes for different macroblock sizes are supported. Each segmentation manner corresponds to one or more intra-frame coding modes. In a process of performing the intra-frame predictive coding, a coding cost of each intra-frame coding mode needs to be calculated.

Finally, a coding mode corresponding to a lowest coding cost is determined among the coding costs corresponding to inter-frame coding modes and the coding costs corresponding to intra-frame coding modes, and the coding mode is determined as an optimal coding mode of the macroblock.

In conclusion, during existing video compression, each inter-frame coding mode and each intra-frame coding mode need to be calculated, increasing a processing amount in a coding process. How to decrease the processing amount in the coding process has become a problem to be resolved by a person skilled in the art.

According to a video coding processing method provided in the embodiments of the present disclosure, an inter-frame coding cost and an intra-frame coding cost may be obtained at a processing amount which is less than or even much less than that in the inter-frame predictive coding and the intra-frame predictive coding. Then, a coding scheme, that is, the intra-frame predictive coding or the inter-frame predictive coding, of a to-be-coded macroblock is determined based on a comparison result between the inter-frame coding cost and the intra-frame coding cost, so that the to-be-coded macroblock can be coded through only the intra-frame predictive coding or the inter-frame predictive coding in a coding process, to decrease the processing amount in the coding process, and improve a processing speed and processing performance.

The video coding processing method provided in the embodiments of the present disclosure may be applied to an application scenario in which a video compression technology is required, for example, an application scenario in which terminals perform video chat (specifically, for example, performing video chat by using communications software such as WeChat or QQ), or an application scenario in which a terminal or a server needs to store massive videos (for example, surveillance videos). A video compression speed can be greatly improved by using the video coding processing method provided in the embodiments of the present disclosure.

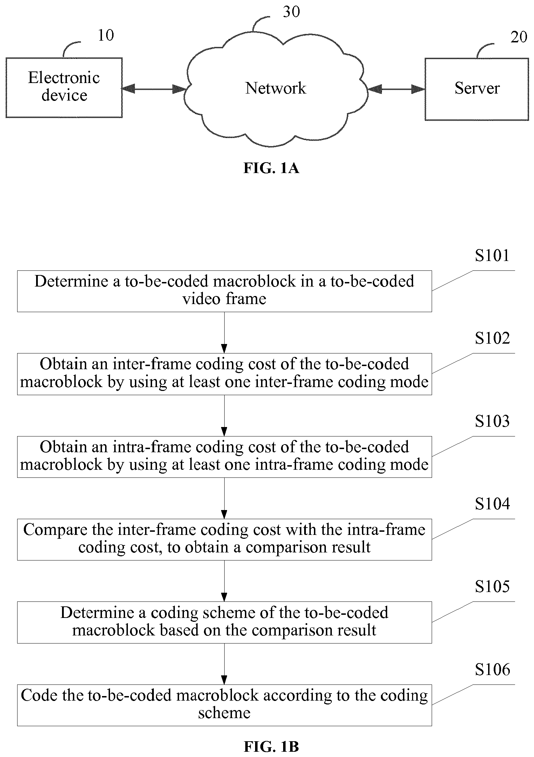

FIG. 1A is a schematic diagram of an implementation environment of a video coding processing method according to an embodiment of the present disclosure. A video coding processing apparatus provided in any embodiment of the present disclosure is integrated in an electronic device 10, and the electronic device 10 is configured to implement the video coding processing method provided in any embodiment of the present disclosure. The electronic device 10 is connected to a server 20 through a network 30. The network 30 may be a wired the network, or may be a wireless network.

The video coding processing method provided in the embodiments of the present disclosure is described in detail below.

FIG. 1B is a flowchart of a video coding processing method according to an embodiment of the present disclosure. The method is applied to the foregoing electronic device. The method includes the following steps S101 to S106.

In step S101, a to-be-coded macroblock in a to-be-coded video frame is determined.

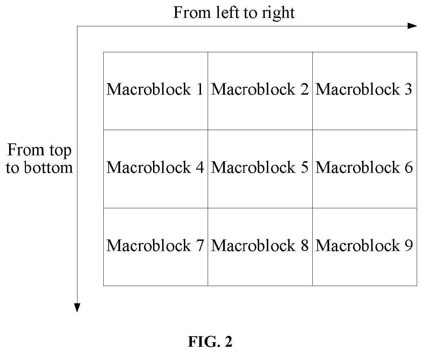

FIG. 2 is a schematic diagram of a to-be-coded video frame according to an embodiment of the present disclosure.

As shown in FIG. 2, it is assumed that the to-be-coded video frame is segmented into nine macroblocks that are respectively a macroblock 1, a macroblock 2, a macroblock 3, a macroblock 4, a macroblock 5, a macroblock 6, a macroblock 7, a macroblock 8, and a macroblock 9.

In an embodiment of the present disclosure, the to-be-coded video frame is traversed from top to bottom and from left to right to sequentially determining the coding macroblocks in the to-be-coded video frame as the to-be-coded macroblock. Assuming that the macroblock 1, the macroblock 2, the macroblock 3, and the macroblock 4 are respectively coded by using the video coding processing method according to the embodiment of the present disclosure, a current to-be-coded macroblock is the macroblock 5.

In step S102, an inter-frame coding cost of the to-be-coded macroblock is obtained by using at least one inter-frame coding mode.

The "at least one inter-frame coding mode" includes the following two cases.

In a first case, the number of the at least one inter-frame coding mode is less than the total number of inter-frame coding modes.

Assuming that the total number of inter-frame coding modes is M (where M is a positive integer), and the number of the at least one inter-frame coding mode is N, N<M.

In step S102, coding costs of N (N<M) inter-frame coding modes may be obtained, and a lowest coding cost is used as the inter-frame coding cost.

A coding cost calculation equation is used for obtaining the coding costs of the N inter-frame coding modes. A non-simplified coding cost calculation equation or a simplified coding cost calculation equation may be used for obtaining the coding costs of the N inter-frame coding modes in step S 102. A processing amount related to the non-simplified coding cost calculation equation is greater than or much greater than a processing amount related to the simplified coding cost calculation equation.

To further describe the processing amounts related to the simplified coding cost calculation equation and the non-simplified coding cost calculation equation, an embodiment of the present disclosure provides, but is not limited to, the following described coding cost calculation equation cos *t* :
cos*t* = *D* + *λ* × *R,* where D is an error between a predicted value of the to-be-coded macroblock that is obtained by using a coded video frame and the to-be-coded video frame and an actual value of the to-be-coded macroblock, and may be represented by using a mean square error, A is a Lagrange multiplier, and R is the number of bits of the to-be-coded macroblock obtained by entropy coding.

The simplified coding cost calculation equation may be expressed as *cost* = *D.*

A calculation process of D is relatively complex. First, an absolute error and an SAD between the predicted value of the to-be-coded macroblock that is obtained by using the coded video frame and the to-be-coded video frame and the actual value of the to-be-coded macroblock are obtained, and then D is calculated based on SAD.

The simplified coding cost calculation equation in an embodiment of the present disclosure may alternatively be expressed as cos *t* = *SAD* + *λ* × *R* or cos *t* = *SAD*.

In an embodiment of the present disclosure, D and SAD are collectively referred to as error information obtained by using the coded video frame and the to-be-coded video frame.

In conclusion, because N<M, the processing amount involved in the process of obtaining the coding costs of the N inter-frame coding modes is less than a processing amount involved in inter-frame predictive coding regardless of whether the simplified coding cost calculation equation is used.

In a second case, a coding cost corresponding to the at least one inter-frame coding mode is error information obtained by using a coded video frame and the to-be-coded video frame.

In the second case, the number of the at least one inter-frame coding mode is not limited, and the number N of the at least one inter-frame coding mode ≤ the total number M of inter-frame coding modes. However, to decrease a processing amount involved in the "obtaining an inter-frame coding cost of the to-be-coded macroblock by using at least one inter-frame coding mode", a simplified coding cost calculation equation is used for obtaining a coding cost of at least one inter-frame coding mode in a process of calculating the coding costs of the N inter-frame coding modes.

It may be learned according to the first case and the second case that in an embodiment of the present disclosure, the number N of the at least one inter-frame coding mode < the total number M of inter-frame coding modes, and the simplified coding cost calculation equation is used for calculating the coding costs of the N inter-frame coding modes.

In step S103, an intra-frame coding cost of the to-be-coded macroblock is obtained by using at least one intra-frame coding mode.

The "at least one intra-frame coding mode" includes the following two cases.

In a first case, the number of the at least one intra-frame coding mode is less than the total number of intra-frame coding modes.

Assuming that the total number of intra-frame coding modes is L (where L is a positive integer), and the number of the at least one intra-frame coding mode is P, P<L.

For example, in intra-frame predictive coding, only four intra-frame coding modes corresponding to a 4×4 macroblock may be selected from five intra-frame coding modes corresponding to a 16×16 macroblock and nine intra-frame coding modes corresponding to the 4×4 macroblock. In this scenario, P=4, and L=14.

In step S103, coding costs of P inter-frame coding modes may be obtained, and a lowest coding cost is used as the intra-frame coding cost.

A coding cost calculation equation is used for obtaining the coding costs of the P intra-frame coding modes. A non-simplified coding cost calculation equation or a simplified coding cost calculation equation may be used for obtaining the coding costs of the P intra-frame coding modes in step S103. A processing amount related to the non-simplified coding cost calculation equation is greater than or much greater than a processing amount related to the simplified coding cost calculation equation.

To further describe the processing amounts related to the simplified coding cost calculation equation and the non-simplified coding cost calculation equation, an embodiment of the present disclosure provides, but is not limited to, the following described coding cost calculation equation cos *t* :
cost = *D* + *λ* × *R,* where D is an error between a predicted value of the to-be-coded macroblock that is obtained by using a coded macroblock in the to-be-coded video frame and the to-be-coded video frame and an actual value of the to-be-coded macroblock, and may be represented by using a mean square error, *λ* is a Lagrange multiplier, and R is the number of bits of the to-be-coded macroblock obtained by entropy coding.

The simplified coding cost calculation equation may be expressed as cos*t* = *D*.

A calculation process of D is relatively complex. First, an absolute error and an SAD between the predicted value of the to-be-coded macroblock that is obtained by using the coded macroblock in the to-be-coded video frame and the to-be-coded video frame and the actual value of the to-be-coded macroblock are obtained, and then D is calculated based on SAD.

The simplified coding cost calculation equation in an embodiment of the present disclosure may alternatively be expressed as cos *t* = *SAD* + *λ* × *R* or cos *t* = *SAD.*

In an embodiment of the present disclosure, D and SAD are collectively referred to as error information obtained by using the coded macroblock in the to-be-coded video frame and the to-be-coded video frame.

In conclusion, because P<L, the processing amount involved in the process of obtaining the coding costs of the P intra-frame coding modes is less than a processing amount involved in the intra-frame predictive coding regardless of whether the simplified coding cost calculation equation is used.

In a second case, a coding cost corresponding to the at least one intra-frame coding mode is error information obtained by using a coded macroblock in the to-be-coded video frame and the to-be-coded video frame.

In the second case, the number of the at least one intra-frame coding mode is not limited, and the number P of the at least one intra-frame coding mode ≤ the total number L of inter-frame coding modes. However, to decrease a processing amount involved in the "obtaining an intra-frame coding cost of the to-be-coded macroblock by using at least one intra-frame coding mode", a simplified coding cost calculation equation is used for obtaining a coding cost of at least one intra-frame coding mode in a process of calculating the coding costs of the P intra-frame coding modes.

It may be learned according to the first case and the second case that in an embodiment of the present disclosure, the number P of the at least one intra-frame coding mode < the total number L of intra-frame coding modes, and the simplified coding cost calculation equation is used for calculating the coding costs of the P intra-frame coding modes.

There is no chronological order between step S102 and step S103. Step S102 and step S103 may be simultaneously performed. Alternatively, step S102 may be first performed and then step S103 is performed. Alternatively, step S103 may be first performed and then step S102 is performed.

In step S104, the inter-frame coding cost is compared with the intra-frame coding cost, to obtain a comparison result.

In step S105, a coding scheme of the to-be-coded macroblock is determined based on the comparison result, where the coding scheme includes intra-frame predictive coding and inter-frame predictive coding.

In an embodiment of the present disclosure, in a case that the comparison result indicates that the intra-frame coding cost is greater than A multiplied by the inter-frame coding cost, that is, the intra-frame coding cost > (A × the inter-frame coding cost), the coding scheme of the to-be-coded macroblock is determined as the inter-frame predictive coding. A is a coefficient greater than a first value. This embodiment is not part of the claimed subj ect-matter.

In a case that the comparison result indicates that the inter-frame coding cost is greater than B multiplied by the intra-frame coding cost, that is, the inter-frame coding cost > (B × the intra-frame coding cost), the coding scheme of the to-be-coded macroblock is determined as the intra-frame predictive coding. B is a coefficient greater than a second value. This embodiment is not part of the claimed subject-matter.

The first value is greater than or equal to 1, and A may be any positive number, for example, 2 or 3, that is greater than 1.

The second value is greater than or equal to 1, and B may be any positive number, for example, 1.2, 1.5, or 2, that is greater than 1.

In step S102 and step S103, the inter-frame coding cost may be obtained by using some of the inter-frame coding modes, and the intra-frame coding cost may be obtained by using some of the intra-frame coding modes; or the intra-frame coding cost and the inter-frame coding cost may be obtained by using the simplified coding cost calculation equation. Therefore, whether the intra-frame predictive coding or the inter-frame predictive coding is used can only be roughly determined based on the comparison result between the inter-frame coding cost and the intra-frame coding cost. A specific coding mode needs to be further determined.

In step S106, the to-be-coded macroblock is coded according to the coding scheme.

If the coding scheme is the intra-frame predictive coding, a coding cost of each intra-frame coding mode in the intra-frame predictive coding needs to be calculated in step S106, a coding mode corresponding to a lowest coding cost is determined as an optimal coding mode of the to-be-coded macroblock, and the to-be-coded macroblock is coded in the optimal coding mode.

If the coding scheme is the inter-frame predictive coding, a coding cost of each inter-frame coding mode in the inter-frame predictive coding needs to be calculated in step S106, a coding mode corresponding to a lowest coding cost is determined as an optimal coding mode of the to-be-coded macroblock, and the to-be-coded macroblock is coded in the optimal coding mode.

To make a person skilled in the art better understand beneficial effects in the embodiment of the present disclosure, a specific example is used below for description. Assuming that the number of "the at least one inter-frame coding mode" in step S 102 is 1, the number of "the at least one intra-frame coding mode" in step S103 is 1, and the coding scheme determined in step S105 is the intra-frame predictive coding, the coding cost of each intra-frame coding mode in the intra-frame predictive coding needs to be calculated in step S106. Assuming that the total number of intra-frame coding modes is L, a processing amount involved in a macroblock coding process in this embodiment of the present disclosure is 2+L. A processing amount in a macroblock coding process in the conventional technology is L+M (the total number of inter-frame coding modes). M is generally greater than 10. Therefore, the processing amount involved in the coding process can be reduced by using the method according to the embodiment of the present disclosure.

With the video coding processing method according to the embodiment of the present disclosure, the inter-frame coding cost and the intra-frame coding cost may be obtained at a processing amount which is less than or even much less than that in the inter-frame predictive coding and the intra-frame predictive coding. Then, the coding scheme, that is, the intra-frame predictive coding or the inter-frame predictive coding, of the to-be-coded macroblock is determined based on the comparison result between the inter-frame coding cost and the intra-frame coding cost, so that the to-be-coded macroblock can be coded through only the intra-frame predictive coding or the inter-frame predictive coding in the coding process, to decrease the processing amount in the coding process, and improve a processing speed and processing performance.

Further, in an embodiment of the present disclosure, in the process of determining the coding scheme of the to-be-coded macroblock, the coding scheme is obtained based on the comparison result between the inter-frame coding cost and the intra-frame coding cost. The inter-frame coding cost and the intra-frame coding cost are both obtained based on the to-be-coded macroblock, that is, features such as texture, details, and edges of the to-be-coded video frame are combined, so that a more accurate coding scheme is determined.

If the inter-frame coding cost or the intra-frame coding cost is compared with a fixed value, which is unrelated to content of the to-be-coded macroblock, an inaccurate coding scheme is determined based on a result obtained by comparing the inter-frame coding cost with the fixed value or based on a result obtained by comparing the intra-frame coding cost with the fixed value. For example, the to-be-coded video frame has many details, both the inter-frame coding cost and the intra-frame coding cost of the to-be-coded macroblock in the to-be-coded video frame may be greater than the corresponding fixed value. Therefore, a process of determining the coding scheme as the intra-frame predictive coding only because that the inter-frame coding cost is greater than the fixed value is inaccurate. This problem is perfectly avoided by using the method according to the embodiment of the present disclosure.

In the foregoing embodiment, the coding scheme of the to-be-coded macroblock may be determined based on the comparison result through multiple methods. An embodiment of the present disclosure provides, but is not limited to, the following method, which includes:
obtaining, based on the comparison result, a probability of performing the intra-frame predictive coding on the to-be-coded macroblock and a probability of performing the inter-frame predictive coding on the to-be-coded macroblock; and
determining the coding scheme of the to-be-coded macroblock based on the probability of the intra-frame predictive coding and the probability of the inter-frame predictive coding.

The probability may be a probability event. A higher probability indicates a higher probability that coding performed in this manner is optimal.

According to an embodiment of the present disclosure, the probability of performing the intra-frame predictive coding on the to-be-coded macroblock and the probability of performing the inter-frame predictive coding on the to-be-coded macroblock may be determined based on the comparison result through multiple methods. An embodiment of the present disclosure provides, but is not limited to, the following first and second methods.

A first method includes the following cases.

In a case that the comparison result indicates that the intra-frame coding cost is greater than A multiplied by the inter-frame coding cost, it is determined that the probability of the intra-frame predictive coding is less than the probability of the inter-frame predictive coding.

In an embodiment of the present disclosure, the coding scheme of the to-be-coded macroblock is determined as the inter-frame predictive coding. A is a coefficient greater than a first value.

In a case that the comparison result indicates that the inter-frame coding cost is greater than B multiplied by the intra-frame coding cost, it is determined that the probability of the inter-frame predictive coding is less than the probability of the intra-frame predictive coding.

In an embodiment of the present disclosure, the coding scheme of the to-be-coded macroblock is determined as the intra-frame predictive coding, and B is a coefficient greater than a second value.

The second method includes:
obtaining coding schemes of K neighboring coded macroblocks of the to-be-coded macroblock, where K is a positive integer, and
obtaining the probability of the intra-frame predictive coding and the probability of the inter-frame predictive coding based on the comparison result and the coding schemes of the K neighboring coded macroblocks.

A different location of the to-be-coded macroblock in the to-be-coded video frame causes a different value of K. Still using FIG. 2 as an example, if the macroblock 1 is the to-be-coded macroblock, K is 0. If the macroblock 2 is the to-be-coded macroblock, K is 1, and a coded macroblock neighboring to the macroblock 2 is the macroblock 1. If the macroblock 3 is the to-be-coded macroblock, K is 1, and a coded macroblock neighboring to the macroblock 3 is the macroblock 2. If the macroblock 4 is the to-be-coded macroblock, K is 2, and coded macroblocks neighboring to the macroblock 4 are the macroblock 1 and the macroblock 2. If the macroblock 5 is the to-be-coded macroblock, K is 4, and coded macroblocks neighboring to the macroblock 5 are the macroblock 1, the macroblock 2, the macroblock 3, and the macroblock 4. Other cases can be reasoned by analogy and therefore be omitted herein.

In conclusion, "neighboring" defined in the embodiments of the present disclosure means that a left macroblock (for example, the macroblock 4), a right macroblock (for example, the macroblock 6), an upper left macroblock (for example, the macroblock 1), an upper macroblock (for example, the macroblock 2), an upper right macroblock (for example, the macroblock 3), a lower left macroblock (for example, the macroblock 7), a lower macroblock (for example, the macroblock 8), and a lower right macroblock (for example, the macroblock 9) are all neighboring to the to-be-coded macroblock (assumed as the macroblock 5).

A different manner of traversing the to-be-coded video frame causes a different value of K. for example, in a case that the to-be-coded video frame is traversed from top to bottom and from left to right, the value of K may be 0, 1, 2, or 4. The value of K may correspondingly change in another traverse manner.

The second method is based on a principle that a coding scheme of the to-be-coded macroblock is very probably the same as the coding scheme of the coded macroblock neighboring to the to-be-coded macroblock.

In step S 102 and step S103, the inter-frame coding cost may be obtained by using some of the inter-frame coding modes, and the intra-frame coding cost may be obtained by using some of the intra-frame coding modes; or the intra-frame coding cost and the inter-frame coding cost may be obtained by using the simplified coding cost calculation equation. Therefore, there is an error in a case that the inter-frame coding cost and the intra-frame coding cost are based upon. In addition, a macroblock located at an edge of a video frame may have fewer details than a macroblock not located at the edge of the video frame, and the macroblock located at the edge of the video frame have more edge features than those of the macroblock not located at the edge of the video frame. Therefore, a coding scheme of the macroblock located at the edge of the video frame is very probably different from a coding scheme of a neighboring coded macroblock, and a coding scheme of the macroblock not located at the edge of the video frame is very probably the same as a coding scheme of a neighboring coded macroblock.

Therefore, the comparison result, the coding schemes of the K neighboring coded macroblocks, and the location of the to-be-coded macroblock in the to-be-coded video frame may be combined, to more accurately determine the probability of the intra-frame predictive coding and the probability of the inter-frame predictive coding.

According to an embodiment of the present disclosure, the probability of the intra-frame predictive coding and the probability of the inter-frame predictive coding may be obtained based on the comparison result and the coding schemes of the K neighboring coded macroblocks through multiple method. An embodiment of the present disclosure provides, but is not limited to, the following method:
in a case that the comparison result indicates that the intra-frame coding cost is greater than A multiplied by the inter-frame coding cost, setting the probability of the inter-frame predictive coding to a first preset value, and determining the probability of the intra-frame predictive coding based on a location of the to-be-coded macroblock in the to-be-coded video frame and the coding schemes of the K neighboring coded macroblocks, where A is a coefficient greater than a first value, and
in a case that the comparison result indicates that the inter-frame coding cost is greater than B multiplied by the intra-frame coding cost, setting the probability of the intra-frame predictive coding to a second preset value, and determining the probability of the inter-frame predictive coding based on the location of the to-be-coded macroblock in the to-be-coded video frame and the coding schemes of the K neighboring coded macroblocks, where B is a coefficient greater than a second value.

In an embodiment of the present disclosure, in a case that the coding scheme is the inter-frame predictive coding or the intra-frame predictive coding, a processing amount involved in the entire video coding processing method is less than a sum of the processing amounts involved in the inter-frame predictive coding and the intra-frame predictive coding in the conventional technology.

In an embodiment of the present disclosure, the coding scheme is the inter-frame predictive coding in a case that the to-be-coded macroblock has the following features. The "determining the probability of the intra-frame predictive coding based on a location of the to-be-coded macroblock in the to-be-coded video frame and the coding schemes of the K neighboring coded macroblocks" includes:
setting the probability of the intra-frame predictive coding to a third preset value in a case that the to-be-coded macroblock is located at an edge of the to-be-coded video frame, and
setting the probability of the intra-frame predictive coding to a fourth preset value in a case that the to-be-coded macroblock is not located at the edge of the to-be-coded video frame and the number of coded macroblocks of which coding schemes are the intra-frame predictive coding among the K neighboring coded macroblocks is less than a third value.

The third value may be a positive integer greater than or equal to 1.

Correspondingly, in a case that the probability of the inter-frame predictive coding is the first preset value, the determining the coding scheme of the to-be-coded macroblock based on the probability of the intra-frame predictive coding and the probability of the inter-frame predictive coding includes:
determining, in a case that the probability of the intra-frame predictive coding is the third preset value, that the coding scheme of the to-be-coded macroblock includes first performing the inter-frame predictive coding and then determining, based on a result of the inter-frame predictive coding, that the intra-frame predictive coding does not need to be performed, and
determining the coding scheme of the to-be-coded macroblock as the inter-frame predictive coding in a case that the probability of the intra-frame predictive coding is the fourth preset value.

Processing amounts involved in the foregoing two cases are both less than the sum of the processing amounts in the inter-frame predictive coding and the intra-frame predictive coding in the conventional technology.

In an embodiment of the present disclosure, the coding scheme is the intra-frame predictive coding in a case that the to-be-coded macroblock has the following features. The "determining the probability of the inter-frame predictive coding based on the location of the to-be-coded macroblock in the to-be-coded video frame and the coding schemes of the K neighboring coded macroblocks" includes:
setting the probability of the inter-frame predictive coding to a fifth preset value in a case that the to-be-coded macroblock is located at an edge of the to-be-coded video frame, and
setting the probability of the inter-frame predictive coding to a sixth preset value in a case that the to-be-coded macroblock is not located at the edge of the to-be-coded video frame and the number of coded macroblocks of which coding schemes are the intra-frame predictive coding among the K neighboring coded macroblocks is greater than or equal to a fourth value.

The fourth value may be a positive integer greater than or equal to 1.

Correspondingly, in a case that the probability of the intra-frame predictive coding is the second preset value, the determining the coding scheme of the to-be-coded macroblock based on the probability of the intra-frame predictive coding and the probability of the inter-frame predictive coding includes:
determining, in a case that the probability of the inter-frame predictive coding is the fifth preset value, that the coding scheme of the to-be-coded macroblock includes first performing the intra-frame predictive coding and then determining, based on a result of the intra-frame predictive coding, that the inter-frame predictive coding does not need to be performed; or
determining the coding scheme of the to-be-coded macroblock as the intra-frame predictive coding in a case that the probability of the inter-frame predictive coding is the sixth preset value.

In a case that the coding scheme is the first performing the intra-frame predictive coding and then determining, based on a result of the intra-frame predictive coding, that the inter-frame predictive coding does not need to be performed and in a case that the coding scheme is performing the intra-frame predictive coding only, the processing amount involved in the video coding processing method provided according to the embodiment of the present disclosure is less than the sum of the processing amounts involved in the inter-frame predictive coding and the intra-frame predictive coding in the conventional technology.

It may be understood that the inter-frame coding cost obtained in step S102 and the intra-frame coding cost obtained in step S 103 each have an error. Therefore, if the coding scheme is the intra-frame predictive coding only or the inter-frame predictive coding only, an optimal coding scheme may be missed. To make the technical solution more complete, the coding scheme according to an embodiment of the present disclosure may include: simultaneously performing the inter-frame predictive coding and the intra-frame predictive coding; or first performing the inter-frame predictive coding and then determining, based on a result of the inter-frame predictive coding, that the intra-frame predictive coding needs to be performed; or first performing the intra-frame predictive coding and then determining, based on a result of the intra-frame predictive coding, that the inter-frame predictive coding needs to be performed.

In a complete technical solution, the coding scheme may include the above five different manners. In an embodiment of the present disclosure, the first performing the inter-frame predictive coding and then determining, based on a result of the inter-frame predictive coding, that the intra-frame predictive coding needs to be performed and the first performing the inter-frame predictive coding and then determining, based on a result of the inter-frame predictive coding, that the intra-frame predictive coding does not need to be performed are collectively referred to as one coding scheme, that which is, the first performing the inter-frame predictive coding and then determining, based on a result of the inter-frame predictive coding, whether to perform the intra-frame predictive coding; the first performing the intra-frame predictive coding and then determining, based on a result of the intra-frame predictive coding, that the inter-frame predictive coding needs to be performed and the first performing the intra-frame predictive coding and then determining, based on a result of the intra-frame predictive coding, that the inter-frame predictive coding does not need to be performed are collectively referred to as one coding scheme, that is, the first performing the intra-frame predictive coding and then determining, based on a result of the intra-frame predictive coding, whether to perform the intra-frame predictive coding needs to be performed.

Although a processing amount involved in some coding schemes is greater than the processing amounts involved in the inter-frame predictive coding and the intra-frame predictive coding, in an application scenario of coding massive macroblocks, a sum of processing amounts involved in a process of coding the massive macroblocks by using the video coding processing method according to the embodiment of the present disclosure is less than or even much less than the sum of the processing amounts in the inter-frame predictive coding and the intra-frame predictive coding in the conventional technology.

In conclusion, the processing amount involved in the coding process is decreased with the video coding processing method according to the embodiment of the present disclosure.

Five cases are set for the foregoing five different coding schemes. Details are described as follows.

In a case that the comparison result indicates that the intra-frame coding cost is greater than A multiplied by the inter-frame coding cost and the probability of the inter-frame predictive coding is the first preset value, the determining the probability of the intra-frame predictive coding based on a location of the to-be-coded macroblock in the to-be-coded video frame and the coding schemes of the K neighboring coded macroblocks may include the following three cases.

Case one: The probability of the intra-frame predictive coding is set to the third preset value in a case that the to-be-coded macroblock is located at the edge of the to-be-coded video frame.

If the to-be-coded macroblock is located at the edge of the to-be-coded video frame, which may include features such as sudden changes in color and lightness, the probability of the intra-frame predictive coding cannot be simply determined based on the coding schemes of the K neighboring coded macroblocks.

In Case one, the probability of the intra-frame predictive coding exists. Therefore, the probability of the intra-frame predictive coding is set to the third preset value.

Case two: The probability of the intra-frame predictive coding is set to the second preset value in a case that the to-be-coded macroblock is not located at the edge of the to-be-coded video frame and the number of coded macroblocks of which coding schemes are the intra-frame predictive coding among the K neighboring coded macroblocks is greater than or equal to the third value.

The third value may be a positive integer greater than or equal to 1.

If the number of coded macroblocks of which coding schemes are the intra-frame predictive coding among the K neighboring coded macroblocks is greater than or equal to the third value, it is indicated that the intra-frame predictive coding is very probably performed on the to-be-coded macroblock. Therefore, the probability of the intra-frame predictive coding is set to the second preset value.

Case three: The probability of the intra-frame predictive coding is set to the fourth preset value in a case that the to-be-coded macroblock is not located at the edge of the to-be-coded video frame and the number of coded macroblocks of which coding schemes are the intra-frame predictive coding among the K neighboring coded macroblocks is less than the third value.

If the number of coded macroblocks of which coding schemes are the intra-frame predictive coding among the K neighboring coded macroblocks is less than the third value, it is indicated that the intra-frame predictive coding cannot be performed on the to-be-coded macroblock. Therefore, the probability of the intra-frame predictive coding is set to the fourth preset value.

The first preset value, the second preset value, the third preset value, and the fourth preset value may be any numbers or symbols, and may have no value relationship with each other.

In an embodiment of the present disclosure, the first preset value is equal to the second preset value, the first preset value is greater than the third preset value, and the third preset value is greater than the fourth preset value.

To enable a person skilled in the art to better understand a relationship between the first preset value, the second preset value, the third preset value, and the fourth preset value, a specific example is used below. An embodiment of the present disclosure provides, but is not limited to, the following specific example.

It is assumed that the intra-frame coding cost of the to-be-coded macroblock is *Intra*_{cost}*,* the inter-frame coding cost is *Inter*_{cost}*,* macroblocks in the to-be-coded video frame are traversed from top to bottom and from left to right, a maximum value of K is 4, and the number of coded macroblocks of which coding schemes are the intra-frame predictive coding among the K neighboring coded macroblocks is *Num*ᵢₙₜ*ᵣₐ.*

In an embodiment of the present disclosure, the probability Pr*ob*_{int*ra*} of the intra-frame predictive coding is initially set to 2 (the second preset value), and the probability Pr*ob*_{int*er*} of the inter-frame predictive coding is set to 2 (the first preset value). If *Intra*_{cost} > *A** *Inter cost,* the probability Pr*ob*_{int*ra*} of the intra-frame predictive coding is set to 0 (the fourth preset value).

Case one: If K<4 (that is, the to-be-coded macroblock is located at the edge of the to-be-coded video frame), and the probability Pr*ob*_{int*ra*} of the intra-frame predictive coding is 0 (the fourth preset value), the probability Pr*ob*_{int*ra*} of the intra-frame predictive coding is reset to 1 (the third preset value).

Case two: If K=4 (that is, the to-be-coded macroblock is not located at the edge of the to-be-coded video frame), and *Num*_{int*ra*} ≥1 (the third value), the probability Pr*ob*_{int*ra*} of the intra-frame predictive coding is set to 2 (the second preset value).

Case three: If K=4 (that is, the to-be-coded macroblock is not located at the edge of the to-be-coded video frame), and *Num*_{int*ra*} <1 (the third value), the probability Pr*ob*_{int*ra*} of the intra-frame predictive coding is set to 0 (the fourth preset value).

In a case that the probability of the inter-frame predictive coding is the first preset value, the determining the coding scheme of the to-be-coded macroblock based on the probability of the intra-frame predictive coding and the probability of the inter-frame predictive coding includes the following three cases.

In a case that the probability of the intra-frame predictive coding is the third preset value (that is, in Case one), the coding scheme of the to-be-coded macroblock is determined as the first performing the inter-frame predictive coding and then determining, based on a result of the inter-frame predictive coding, whether to perform the intra-frame predictive coding.

In a case that the probability of the intra-frame predictive coding is the second preset value (that is, in Case two), the coding scheme of the to-be-coded macroblock is determined as the simultaneously performing the intra-frame predictive coding and the inter-frame predictive coding.

In a case that the probability of the intra-frame predictive coding is the fourth preset value (that is, in Case three), the coding scheme of the to-be-coded macroblock is determined as the inter-frame predictive coding.

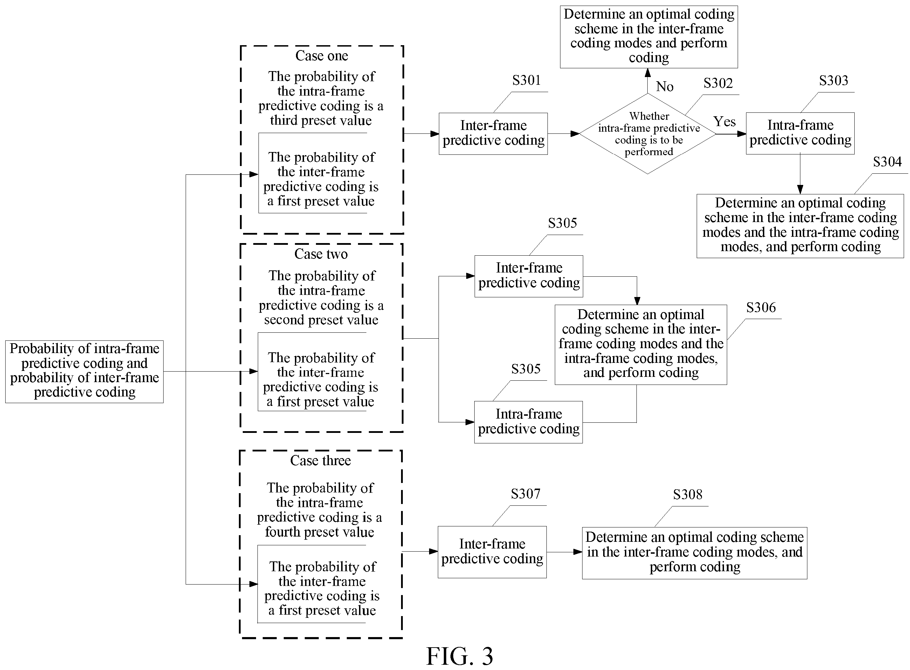

FIG. 3 is a schematic diagram of a process of coding a to-be-coded macroblock in different cases according to an embodiment of the present disclosure.

In Case one, the "coding the to-be-coded macroblock according to the coding scheme" includes the following steps S301 to S304.

In step S301, inter-frame predictive coding is performed, where an execution process of the inter-frame predictive coding may include:
calculating a coding cost of each inter-frame coding mode in the inter-frame predictive coding.

In step S302, it is determined whether intra-frame predictive coding is to be performed, where a specific process may include:
obtaining a prediction error and a bit rate of a first coding mode corresponding to the lowest one of the coding cost of each inter-frame coding mode.

In a case that the prediction error of the first coding mode is less than a first preset error value and the bit rate is less than a first preset bit rate value, the first coding mode is determined as an optimal coding mode of the to-be-coded macroblock, and the to-be-coded macroblock is coded in the first coding mode. Otherwise, step S303 is performed.

The bit rate refers to a sampling rate. A higher sampling rate per unit time indicates higher precision and higher approximation of an obtained video to an original video. For a same video frame, a higher bit rate indicates a larger data amount.

In step S303, the intra-frame predictive coding is performed, where an execution process of the intra-frame predictive coding may include:
calculating a coding cost of each intra-frame coding mode in the intra-frame predictive coding.

In step S304, a second coding mode corresponding to the lowest one of the coding cost of each inter-frame coding mode and the coding cost of each intra-frame coding mode is determined, the second coding mode is determined as an optimal coding mode of the to-be-coded macroblock, and the to-be-coded macroblock is coded in the second coding mode.

In Case two, the "coding the to-be-coded macroblock according to the coding scheme" includes the following steps S305 to S306.

In step S305, inter-frame predictive coding and intra-frame predictive coding are performed, where a specific execution process may include:
calculating a coding cost of each inter-frame coding mode and a coding cost of each inter-frame mode.

In step S306, a third coding mode corresponding to a lowest coding cost in the inter-frame coding modes and the intra-frame coding modes is determined as an optimal coding mode, and the to-be-coded macroblock is coded in the third coding mode.

In Case three, the "coding the to-be-coded macroblock according to the coding scheme" includes the following steps S307 to S308.

In step S307, inter-frame predictive coding is performed.

In step S308, a fourth coding mode corresponding to a lowest coding cost in the inter-frame coding modes is determined as an optimal coding mode, and the to-be-coded macroblock is coded in the fourth coding mode.

One to-be-coded macroblock corresponds only to one of the foregoing cases. Therefore, there is no chronological order between the steps in Case one, Case two, and Case three.

In a case that the comparison result indicates that the inter-frame coding cost is greater than B multiplied by the intra-frame coding cost, and the probability of the intra-frame predictive coding is set to the second preset value, the determining the probability of the inter-frame predictive coding based on a location of the to-be-coded macroblock in the to-be-coded video frame and the coding schemes of the K neighboring coded macroblocks includes the following fourth to sixth cases.

Case four: The probability of the inter-frame predictive coding is set to the fifth preset value in a case that the to-be-coded macroblock is located at the edge of the to-be-coded video frame.

Case five: The probability of the inter-frame predictive coding is set to the sixth preset value in a case that the to-be-coded macroblock is not located at the edge of the to-be-coded video frame and the number of coded macroblocks of which coding schemes are the intra-frame predictive coding among the K neighboring coded macroblocks is greater than or equal to the fourth value.

Case six: The probability of the inter-frame predictive coding is set to the first preset value in a case that the to-be-coded macroblock is not located at the edge of the to-be-coded video frame and the number of coded macroblocks of which coding schemes are the intra-frame predictive coding among the K neighboring coded macroblocks is less than the fourth value.

The probability of the inter-frame predictive coding obtained in Case six may have the same value as the probability of the intra-frame predictive coding obtained in Case two. Therefore, Case six and Case two are collectively referred to as Case two.

The first preset value, the second preset value, the third preset value, the fourth preset value, the fifth preset value, and the sixth preset value may be any numbers or symbols, and may have no value relationship with each other.

To enable a person skilled in the art to better understand a relationship between the first preset value, the second preset value, the fifth preset value, and the sixth preset value, a specific example is used below. An embodiment of the present disclosure provides, but is not limited to, the following specific example.

It is assumed that the intra-frame coding cost of the to-be-coded macroblock is *Intra*_{cost}*,* the inter-frame coding cost is *Inter*_{cost}*,* macroblocks in the to-be-coded video frame are traversed from top to bottom and from left to right, a maximum value of K is 4, and the number of coded macroblocks of which coding schemes are the intra-frame predictive coding among the K neighboring coded macroblocks is *Num*ᵢₙₜ*ᵣₐ.*

In an embodiment of the present disclosure, the probability Pr*ob*_{int*ra*} of the intra-frame predictive coding is initially set to 2 (the second preset value), and the probability Pr*ob*_{int*er*} of the inter-frame predictive coding is set to 2 (the first preset value). If *Inter*_{cost} > *B***Intra*_{cost}*,* the probability Pr*ob*_{int*er*} of the inter-frame predictive coding is set to 0 (the sixth preset value).

Case four: If K<4 (that is, the to-be-coded macroblock is located at the edge of the to-be-coded video frame), and the probability Pr*ob*_{int*er*} of the inter-frame predictive coding is 0 (the sixth preset value), the probability Pr*ob*_{int*er*} of the inter-frame predictive coding is reset to 1 (the fifth preset value).

Case five: If K=4 (that is, the to-be-coded macroblock is not located at the edge of the to-be-coded video frame), and *Num*_{int*ra*} ≥1 (the fourth value), the probability Pr*ob*_{int*er*} of the inter-frame predictive coding is set to 0 (the sixth preset value).

Case two: If K=4 (that is, the to-be-coded macroblock is not located at the edge of the to-be-coded video frame), and *Num*_{int*ra*} <1 (the fourth value), the probability Pr*ob*_{int*er*} of the inter-frame predictive coding is set to 2 (the first preset value).

Correspondingly, in a case that the probability of the intra-frame predictive coding is the second preset value, the determining the coding scheme of the to-be-coded macroblock based on the probability of the intra-frame predictive coding and the probability of the inter-frame predictive coding includes:
determining, in a case that the probability of the inter-frame predictive coding is the first preset value (that is, in Case two), the coding scheme of the to-be-coded macroblock as the simultaneously performing the intra-frame predictive coding and the inter-frame predictive coding,
determining, in a case that the probability of the inter-frame predictive coding is the fifth preset value (that is, in Case four), the coding scheme of the to-be-coded macroblock as the first performing the intra-frame predictive coding and then determining, based on a result of the intra-frame predictive coding, whether to perform the inter-frame predictive coding, and
determining the coding scheme of the to-be-coded macroblock as the intra-frame predictive coding in a case that the probability of the inter-frame predictive coding is the sixth preset value (that is, in Case five).

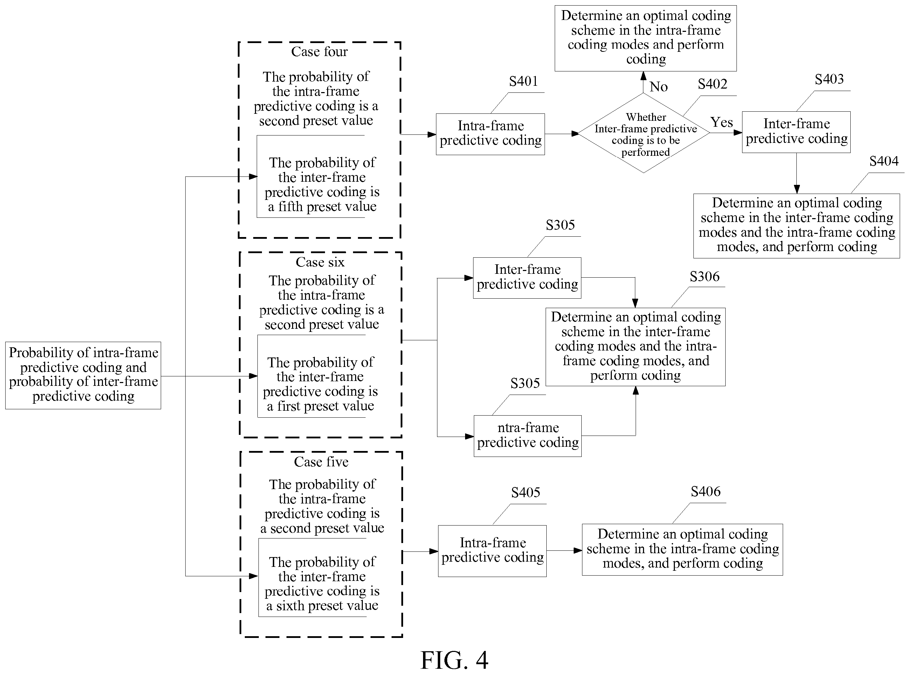

FIG. 4 is a schematic diagram of a process of coding a to-be-coded macroblock in different cases according to an embodiment of the present disclosure.

In Case four, the "coding the to-be-coded macroblock according to the coding scheme" includes the following steps S401 to S404.

In step S401, intra-frame predictive coding is performed, where an execution process of the intra-frame predictive coding may include:
calculating a coding cost of each intra-frame coding mode in the intra-frame predictive coding.

In step S402, It is determined whether inter-frame predictive coding is to be performed, where a specific process may include:
obtaining a prediction error and a bit rate of a fifth coding mode corresponding to the lowest one of the coding cost of each intra-frame coding mode.

In a case that the prediction error of the fifth coding mode is less than a second preset error value and the bit rate is less than a second preset bit rate value, the fifth coding mode is determined as an optimal coding mode of the to-be-coded macroblock, and the to-be-coded macroblock is coded in the fifth coding mode. Otherwise, step S403 is performed.

In step S403, inter-frame predictive coding is performed, where an execution process of the inter-frame predictive coding may include:
calculating a coding cost of each inter-frame coding mode in the inter-frame predictive coding.

In step S404, a sixth coding mode corresponding to the lowest one of the coding cost of each inter-frame coding mode and the coding cost of each intra-frame coding mode is determined, the sixth coding mode is determined as an optimal coding mode of the to-be-coded macroblock, and the to-be-coded macroblock is coded in the sixth coding mode.

In Case five, the "coding the to-be-coded macroblock according to the coding scheme" includes the following steps S405 to S406.

In step S405, intra-frame predictive coding is performed.

In step S406, a seventh coding mode corresponding to a lowest coding cost in the intra-frame coding modes is determined as an optimal coding mode, and the to-be-coded macroblock is coded in the seventh coding mode.

A method for "coding the to-be-coded macroblock according to the coding scheme" in Case six is the same as that in Case two, and details are not described herein again.

In conclusion, in the foregoing five cases, a correspondence between the values of the probability of the intra-frame predictive coding and of the probability of the inter-frame predictive coding and the coding scheme is shown in Table 1.

**Table 1: Correspondence between values of a probability of intra-frame predictive coding and a probability of inter-frame predictive coding, and a coding scheme**

| | Probability of intra-frame predictive coding | Probability of inter-frame predictive coding | Coding scheme |
|---|---|---|---|
| Case one | Third preset value | First preset value | First perform the inter-frame predictive coding and then determine, based on a result of the inter-frame predictive coding, whether to perform the intra-frame predictive coding |
| Case two | Second preset value | First preset value | Simultaneously perform the intra-frame predictive coding and the inter-frame predictive coding |
| Case three | Fourth preset value | First preset value | Perform the inter-frame predictive coding only |
| Case four | Second preset value | Fifth preset value | First perform the intra-frame predictive coding and then determine, based on a result of the intra-frame predictive coding, whether to perform the inter-frame predictive coding |
| Case five | Second preset value | Sixth preset value | Perform the intra-frame predictive coding only |

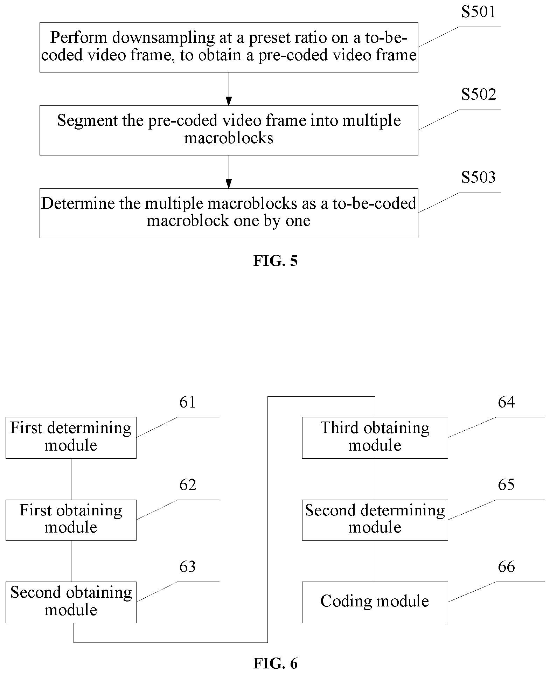

To further decrease the processing burden, downsampling may be performed on the to-be-coded video frame. The downsampling means performing sampling on a sample sequence at intervals of several samples. In this way, an obtained new sequence is downsampling of an original sequence. FIG. 5 is a flowchart of a method for determining a to-be-coded macroblock in a to-be-coded video frame according to an embodiment of the present disclosure. The method includes the following steps S501 to S503.

In step S501, downsampling at a preset ratio is performed on the to-be-coded video frame, to obtain a pre-coded video frame.

The preset ratio may be 2:1, 3:1, 4:1, or the like. To avoid a large difference between details of the pre-coded video frame obtained through the downsampling and details of the to-be-coded video frame, preferably, the preset ratio is 2:1.

Assuming that a length and a width of the to-be-coded video frame are a and b, respectively, and downsampling is performed at a preset ratio of 2:1 is performed, a length and a width of the pre-coded video frame are a/2 and b/2, respectively.

It may be understood that the pre-coded video frame needs to be segmented. Therefore, to ensure that the pre-coded video frame can be segmented into multiple macroblocks, a length and a width of a video frame obtained through the downsampling need to be adjusted. Specifically, the "performing downsampling at a preset ratio on the to-be-coded video frame, to obtain a pre-coded video frame" includes:
performing the downsampling at the preset ratio on the to-be-coded video frame, to obtain a target video frame; and
adjusting the target video frame, to obtain the pre-coded video frame, so that a length of the pre-coded video frame is an integer multiple of a length of the to-be-coded macroblock, and a width of the pre-coded video frame is an integer multiple of a width of the to-be-coded macroblock.

If the length of the target video frame is an integer multiple of the length of the to-be-coded macroblock, and the width of the target video frame is the integer multiple of the width of the to-be-coded macroblock, the target video frame does not need to be adjusted.

Assuming that the to-be-coded macroblock is an 8×8 macroblock, the length of the pre-coded video frame needs to be an integer multiple of 8, and the width of the pre-coded video frame also needs to be the integer multiple of 8. If the to-be-coded macroblock is an 8×4 macroblock, the length of the pre-coded video frame needs to be an integer multiple of 8, and the width of the pre-coded video frame needs to be the integer multiple of 4.

If the to-be-coded macroblock is the 8×8 macroblock, an original macroblock corresponding to the to-be-coded macroblock is a 16×16 macroblock. The number of pixels included in a macroblock on which the downsampling is performed is less than the number of pixels included in a macroblock on which the downsampling is not performed. Therefore, a lower processing amount is involved.

In step S502, the pre-coded video frame is segmented into multiple macroblocks.

In step S503, the multiple macroblocks are determined as the to-be-coded macroblock one by one.

An embodiment of the present disclosure further provides a video coding processing apparatus corresponding to the video coding processing method. The video coding processing apparatus is described below. The video coding processing apparatus and the video coding processing method may be mutually referenced, and details are not described herein again.

FIG. 6 is a schematic structural diagram of a video coding processing apparatus according to an embodiment of the present disclosure. The apparatus includes:
a first determining module 61, configured to determine a to-be-coded macroblock in a to-be-coded video frame;
a first obtaining module 62, configured to obtain an inter-frame coding cost of the to-be-coded macroblock by using at least one inter-frame coding mode, the number of the at least one inter-frame coding mode being less than the total number of inter-frame coding modes, or a coding cost corresponding to the at least one inter-frame coding mode being error information obtained by using a coded video frame and the to-be-coded video frame;
a second obtaining module 63, configured to obtain an intra-frame coding cost of the to-be-coded macroblock by using at least one intra-frame coding mode, the number of the at least one intra-frame coding mode being less than the total number of intra-frame coding modes, or a coding cost corresponding to the at least one intra-frame coding mode being error information obtained by using a coded macroblock in the to-be-coded video frame and the to-be-coded video frame;
a third obtaining module 64, configured to compare the inter-frame coding cost with the intra-frame coding cost, to obtain a comparison result;
a second determining module 65, configured to determine a coding scheme of the to-be-coded macroblock based on the comparison result, the coding scheme including intra-frame predictive coding and inter-frame predictive coding; and
a coding module 66, configured to code the to-be-coded macroblock according to the coding scheme.

In an embodiment of the present disclosure, the second determining module 65 includes:
a third determining unit, configured to determine the coding scheme of the to-be-coded macroblock as the inter-frame predictive coding in a case that the comparison result indicates that the intra-frame coding cost is greater than A multiplied by the inter-frame coding cost, where A is a coefficient greater than a first value; and
a fourth determining unit, configured to determine the coding scheme of the to-be-coded macroblock as the intra-frame predictive coding in a case that the comparison result indicates that the inter-frame coding cost is greater than B multiplied by the intra-frame coding cost, where B is a coefficient greater than a second value. This embodiment is not part of the claimed subject-matter.

In an embodiment of the present disclosure, the second determining module 65 includes:
a first obtaining unit, configured to obtain, based on the comparison result, a probability of performing the intra-frame predictive coding on the to-be-coded macroblock and a probability of performing the inter-frame predictive coding on the to-be-coded macroblock; and
a first determining unit, configured to determine the coding scheme of the to-be-coded macroblock based on the probability of the intra-frame predictive coding and the probability of the inter-frame predictive coding.

In an embodiment of the present disclosure, the first obtaining unit includes:
a first obtaining subunit, configured to obtain coding schemes of K neighboring coded macroblocks of the to-be-coded macroblock, where K is a positive integer; and
a second obtaining subunit, configured to obtain the probability of the intra-frame predictive coding and the probability of the inter-frame predictive coding based on the comparison result and the coding schemes of the K neighboring coded macroblocks.

In an embodiment of the present disclosure, the second obtaining subunit includes:
a first setting subunit, configured to set the probability of the inter-frame predictive coding to a first preset value, and determine the probability of the intra-frame predictive coding based on a location of the to-be-coded macroblock in the to-be-coded video frame and the coding schemes of the K neighboring coded macroblocks in a case that the comparison result indicates that the intra-frame coding cost is greater than A multiplied by the inter-frame coding cost, where A is a coefficient greater than a first value; and
a second setting subunit, configured to set the probability of the intra-frame predictive coding to a second preset value, and determine the probability of the inter-frame predictive coding based on the location of the to-be-coded macroblock in the to-be-coded video frame and the coding schemes of the K neighboring coded macroblocks in a case that the comparison result indicates that the inter-frame coding cost is greater than B multiplied by the intra-frame coding cost, where B is a coefficient greater than a second value.

In an embodiment of the present disclosure, the first setting subunit includes:
a first setting sub-module, configured to set the probability of the intra-frame predictive coding to a third preset value in a case that the to-be-coded macroblock is located at an edge of the to-be-coded video frame,
a second setting sub-module, configured to set the probability of the intra-frame predictive coding to the second preset value in a case that the to-be-coded macroblock is not located at the edge of the to-be-coded video frame and the number of coded macroblocks of which coding schemes are the intra-frame predictive coding among the K neighboring coded macroblocks is greater than or equal to a third value, and
a third setting sub-module, configured to set the probability of the intra-frame predictive coding to a fourth preset value in a case that the to-be-coded macroblock is not located at the edge of the to-be-coded video frame and the number of coded macroblocks of which coding schemes are the intra-frame predictive coding among the K neighboring coded macroblocks is less than the third value.

In an embodiment of the present disclosure, the coding scheme further includes: simultaneously performing the intra-frame predictive coding and the inter-frame predictive coding, and first performing the inter-frame predictive coding and then determining, based on a result of the inter-frame predictive coding, whether to perform the intra-frame predictive coding.

In a case that the probability of the inter-frame predictive coding is the first preset value, the first determining unit includes:
a first determining subunit, configured to determine, in a case that the probability of the intra-frame predictive coding is the second preset value, the coding scheme of the to-be-coded macroblock as the simultaneously performing the intra-frame predictive coding and the inter-frame predictive coding,
a second determining subunit, configured to determine the coding scheme of the to-be-coded macroblock as the inter-frame predictive coding in a case that the probability of the intra-frame predictive coding is the fourth preset value, and
a third determining subunit, configured to determine, in a case that the probability of the intra-frame predictive coding is the third preset value, the coding scheme of the to-be-coded macroblock as the first performing the inter-frame predictive coding and then determining, based on a result of the inter-frame predictive coding, whether to perform the intra-frame predictive coding.

In an embodiment of the present disclosure, the second setting subunit includes:
a fourth setting sub-module, configured to set the probability of the inter-frame predictive coding to a fifth preset value in a case that the to-be-coded macroblock is located at an edge of the to-be-coded video frame,
a fifth setting sub-module, configured to set the probability of the inter-frame predictive coding to a sixth preset value in a case that the to-be-coded macroblock is not located at the edge of the to-be-coded video frame and the number of coded macroblocks of which coding schemes are the intra-frame predictive coding among the K neighboring coded macroblocks is greater than or equal to a fourth value, and
a sixth setting sub-module, configured to set the probability of the inter-frame predictive coding to the first preset value in a case that the to-be-coded macroblock is not located at the edge of the to-be-coded video frame and the number of coded macroblocks of which coding schemes are the intra-frame predictive coding among the K neighboring coded macroblocks is less than the fourth value.

In an embodiment of the present disclosure, the coding scheme further includes: simultaneously performing the intra-frame predictive coding and the inter-frame predictive coding; or first performing the intra-frame predictive coding and then determining, based on a result of the intra-frame predictive coding, whether to perform the inter-frame predictive coding. In a case that the probability of the intra-frame predictive coding is the second preset value, the first determining unit includes:
a fourth determining subunit, configured to determine, in a case that the probability of the inter-frame predictive coding is the first preset value, the coding scheme of the to-be-coded macroblock as the simultaneously performing the intra-frame predictive coding and the inter-frame predictive coding,
a fifth determining subunit, configured to determine the coding scheme of the to-be-coded macroblock as the intra-frame predictive coding in a case that the probability of the inter-frame predictive coding is the sixth preset value, and
a sixth determining subunit, configured to determine, in a case that the probability of the inter-frame predictive coding is the fifth preset value, the coding scheme of the to-be-coded macroblock as the first performing the intra-frame predictive coding and then determining, based on a result of the intra-frame predictive coding, whether to perform the inter-frame predictive coding.

In an embodiment of the present disclosure, the first determining module 61 includes:
a second obtaining unit, configured to perform downsampling at a preset ratio on the to-be-coded video frame, to obtain a pre-coded video frame,
a segmentation unit, configured to segment the pre-coded video frame into multiple macroblocks, and
a second determining unit, configured to determine the multiple macroblocks as the to-be-coded macroblock one by one.

In an embodiment of the present disclosure, the second obtaining unit includes:
a third obtaining subunit, configured to perform the downsampling at the preset ratio on the to-be-coded video frame, to obtain the pre-coded video frame,
a segmentation subunit, configured to segment the pre-coded video frame into the multiple macroblocks, and
a seventh determining subunit, configured to determine the multiple macroblocks as the to-be-coded macroblock one by one.

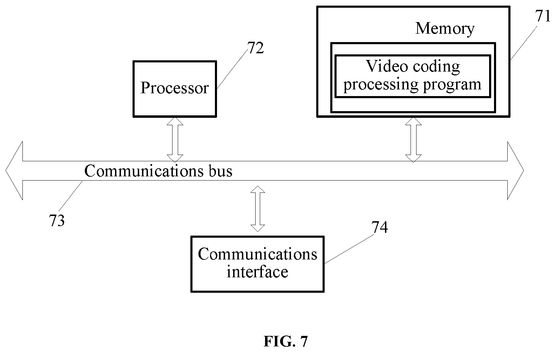

The video coding processing method and apparatus provided according to the embodiments of the present disclosure may be applied to an electronic device (for example, a terminal or a server). FIG. 7 is a schematic structural diagram of an electronic device according to an embodiment of the present disclosure. The electronic device may include:
a memory 71, configured to store a program, where
the program may include program code, and the program code includes computer-executable instructions, that is, machine-readable instructions, for example, a video coding processing program configured to perform the foregoing video coding processing method; and
a processor 72, configured to execute the program.

The memory 71 may include a high-speed RAM memory, and may further include a non-volatile memory, for example, at least one magnetic disk memory.

The processor 72 may be a central processing unit (CPU) or an application-specific integrated circuit (ASIC), or may be one or more integrated circuits configured to implement the embodiments of the present disclosure.

The processor 72 executes the machine-readable instructions stored in the memory 71 to perform the following operations:
determining a to-be-coded macroblock in a to-be-coded video frame,
obtaining an inter-frame coding cost of the to-be-coded macroblock by using at least one inter-frame coding mode, the number of the at least one inter-frame coding mode being less than the total number of inter-frame coding modes, or a coding cost corresponding to the at least one inter-frame coding mode being error information obtained by using a coded video frame and the to-be-coded video frame,
obtaining an intra-frame coding cost of the to-be-coded macroblock by using at least one intra-frame coding mode, the number of the at least one intra-frame coding mode being less than the total number of intra-frame coding modes, or a coding cost corresponding to the at least one intra-frame coding mode being error information obtained by using a coded macroblock in the to-be-coded video frame and the to-be-coded video frame,
comparing the inter-frame coding cost with the intra-frame coding cost, to obtain a comparison result,
determining a coding scheme of the to-be-coded macroblock based on the comparison result, the coding scheme including intra-frame predictive coding and inter-frame predictive coding, and
coding the to-be-coded macroblock according to the coding scheme.

In an embodiment of the present disclosure, the electronic device may further include a communications bus 73 and a communications interface 74. The memory 71, the processor 72, and the communications interface 74 communicate with each other by using the communications bus 73.

In an embodiment of the present disclosure, the communication interface 74 may be an interface of a communication module, for example, an interface of a GSM module.

In an embodiment of the present disclosure, for specific functions of the electronic device, refer to the foregoing video coding processing method and apparatus, and details are not described herein again.

At last, it should be noted that the relational terms herein such as first and second are used only to differentiate an entity or operation from another entity or operation, and do not require or imply any actual relationship or sequence between these entities or operations. In addition, the terms "include", "comprise", and any variants thereof are intended to cover a non-exclusive inclusion. Therefore, a process, method, object, or device that includes a series of elements not only includes such elements, but also includes other elements not specified expressly, or may include inherent elements of the process, method, object, or device. Unless otherwise specified, an element limited by "include a/an..." does not exclude other same elements existing in the process, the method, the article, or the device that includes the elements.

The embodiments in this specification are all described in a progressive manner. Descriptions of each embodiment focus on differences from other embodiments, and same or similar parts among respective embodiments may be mutually referenced.

The invention is set out in the appended claims.

## Claims

1. A video coding processing method, applied to an electronic device, and comprising:
determining (S101) a to-be-coded macroblock in a to-be-coded video frame;
obtaining (S102) an inter-frame coding cost of the to-be-coded macroblock by using at least one inter-frame coding mode, the number of the at least one inter-frame coding mode being less than the total number of inter-frame coding modes, the coding cost corresponding to the at least one inter-frame coding mode being prediction error information obtained by using a coded video frame and the to-be-coded video frame;
obtaining (S103) an intra-frame coding cost of the to-be-coded macroblock by using at least one intra-frame coding mode, the number of the at least one intra-frame coding mode being less than the total number of intra-frame coding modes, the coding cost corresponding to the at least one intra-frame coding mode being prediction error information obtained by using a coded macroblock in the to-be-coded video frame and the to-be-coded video frame;
comparing (S104) the inter-frame coding cost with the intra-frame coding cost, to obtain a comparison result;
determining (S105) a coding scheme of the to-be-coded macroblock based on the comparison result, the coding scheme comprising intra-frame predictive coding and inter-frame predictive coding; and
coding (S106) the to-be-coded macroblock according to the coding scheme,
wherein the determining a coding scheme of the to-be-coded macroblock based on the comparison result comprises:
obtaining coding schemes of K neighboring coded macroblocks of the to-be-coded macroblock, wherein K is a positive integer,
obtaining, based on the comparison result and the coding schemes of the K neighboring coded macroblocks, a probability of performing the intra-frame predictive coding on the to-be-coded macroblock and a probability of performing the inter-frame predictive coding on the to-be-coded macroblock, comprising:
in a case that the comparison result indicates that the intra-frame coding cost is greater than A multiplied by the inter-frame coding cost, setting the probability of the inter-frame predictive coding to a first preset value , and determining the probability of the intra-frame predictive coding based on a location of the to-be-coded macroblock in the to-be-coded video frame and the coding schemes of the K neighboring coded macroblocks, wherein A is a coefficient greater than a first value, and the first value is greater than or equal to 1, and
in a case that the comparison result indicates that the inter-frame coding cost is greater than B multiplied by the intra-frame coding cost, setting the probability of the intra-frame predictive coding to a second preset value, and determining the probability of the inter-frame predictive coding based on a location of the to-be-coded macroblock in the to-be-coded video frame and the coding schemes of the K neighboring coded macroblocks, wherein B is a coefficient greater than a second value, and the second value is greater than or equal to 1,
determining the coding scheme of the to-be-coded macroblock based on the probability of the intra-frame predictive coding and the probability of the inter-frame predictive coding.

2. The video coding processing method according to claim 1, wherein the determining the probability of the intra-frame predictive coding based on a location of the to-be-coded macroblock in the to-be-coded video frame and the coding schemes of the K neighboring coded macroblocks comprises:
setting the probability of the intra-frame predictive coding to a third preset value in a case that the to-be-coded macroblock is located at an edge of the to-be-coded video frame; and
setting the probability of the intra-frame predictive coding to a fourth preset value in a case that the to-be-coded macroblock is not located at the edge of the to-be-coded video frame and the number of coded macroblocks of which coding schemes are the intra-frame predictive coding among the K neighboring coded macroblocks is less than a third value.

3. The video coding processing method according to claim 2, wherein the determining the probability of the intra-frame predictive coding based on a location of the to-be-coded macroblock in the to-be-coded video frame and the coding schemes of the K neighboring coded macroblocks further comprises:
setting the probability of the intra-frame predictive coding to the second preset value in a case that the to-be-coded macroblock is not located at the edge of the to-be-coded video frame and the number of coded macroblocks of which coding schemes are the intra-frame predictive coding among the K neighboring coded macroblocks is greater than or equal to the third value.

4. The video coding processing method according to claim 3, wherein the coding scheme further comprises: simultaneously performing the intra-frame predictive coding and the inter-frame predictive coding; or first performing the inter-frame predictive coding and then determining, based on a result of the inter-frame predictive coding, whether to perform the intra-frame predictive coding; and
in a case that the probability of the inter-frame predictive coding is the first preset value, the determining the coding scheme of the to-be-coded macroblock based on the probability of the intra-frame predictive coding and the probability of the inter-frame predictive coding comprises:
determining, in a case that the probability of the intra-frame predictive coding is the third preset value, the coding scheme of the to-be-coded macroblock as the first performing the inter-frame predictive coding and then determining, based on a result of the inter-frame predictive coding, whether to perform the intra-frame predictive coding;
determining, in a case that the probability of the intra-frame predictive coding is the fourth preset value, the coding scheme of the to-be-coded macroblock as the inter-frame predictive coding; and
determining, in a case that the probability of the intra-frame predictive coding is the second preset value, the coding scheme of the to-be-coded macroblock as the simultaneously performing the intra-frame predictive coding and the inter-frame predictive coding.

5. The video coding processing method according to claim 1, wherein the determining the probability of the inter-frame predictive coding based on the location of the to-be-coded macroblock in the to-be-coded video frame and the coding schemes of the K neighboring coded macroblocks comprises:
setting the probability of the inter-frame predictive coding to a fifth preset value in a case that the to-be-coded macroblock is located at an edge of the to-be-coded video frame; and
setting the probability of the inter-frame predictive coding to a sixth preset value in a case that the to-be-coded macroblock is not located at the edge of the to-be-coded video frame and the number of coded macroblocks of which coding schemes are the intra-frame predictive coding among the K neighboring coded macroblocks is greater than or equal to a fourth value.

6. The video coding processing method according to claim 5, wherein the determining the probability of the inter-frame predictive coding based on the location of the to-be-coded macroblock in the to-be-coded video frame and the coding schemes of the K neighboring coded macroblocks further comprises:
setting the probability of the inter-frame predictive coding to the first preset value in a case that the to-be-coded macroblock is not located at the edge of the to-be-coded video frame and the number of coded macroblocks of which coding schemes are the intra-frame predictive coding in the K neighboring coded macroblocks is less than the fourth value.

7. The video coding processing method according to claim 6, wherein the coding scheme further comprises: simultaneously performing the intra-frame predictive coding and the inter-frame predictive coding; or first performing the intra-frame predictive coding and then determining, based on a result of the intra-frame predictive coding, whether to perform the inter-frame predictive coding; and
in a case that the probability of the intra-frame predictive coding is the second preset value, the determining the coding scheme of the to-be-coded macroblock based on the probability of the intra-frame predictive coding and the probability of the inter-frame predictive coding comprises:
determining, in a case that the probability of the inter-frame predictive coding is the fifth preset value, the coding scheme of the to-be-coded macroblock as the first performing the intra-frame predictive coding and then determining, based on a result of the intra-frame predictive coding, whether to perform the inter-frame predictive coding;
determining, in a case that the probability of the inter-frame predictive coding is the sixth preset value, the coding scheme of the to-be-coded macroblock as the intra-frame predictive coding; and
determining, in a case that the probability of the inter-frame predictive coding is the first preset value, the coding scheme of the to-be-coded macroblock as the simultaneously performing the intra-frame predictive coding and the inter-frame predictive coding.

8. The video coding processing method according to claim 1, wherein the determining a to-be-coded macroblock in a to-be-coded video frame comprises:
performing downsampling at a preset ratio on the to-be-coded video frame, to obtain a pre-coded video frame;
segmenting the pre-coded video frame into a plurality of macroblocks; and
determining the plurality of macroblocks as the to-be-coded macroblock one by one.

9. The video coding processing method according to claim 8, wherein the performing downsampling at a preset ratio on the to-be-coded video frame, to obtain a pre-coded video frame comprises:
performing the downsampling at the preset ratio on the to-be-coded video frame, to obtain a target video frame; and
adjusting the target video frame, to obtain the pre-coded video frame, so that a length of the pre-coded video frame is an integer multiple of a length of the to-be-coded macroblock, and a width of the pre-coded video frame is an integer multiple of a width of the to-be-coded macroblock.

10. A video coding processing apparatus, comprising:
a processor and a memory connected to the processor, the memory storing machine-readable instructions executable to the processor, and the processor executing the machine-readable instructions to perform the method according to any one of claims 1 to 9.

11. A non-volatile computer-readable storage medium, the storage medium storing machine-readable instructions, and the machine-readable instructions being capable of being executed by a processor to perform the method according to any one of claims 1 to 9.

## Patentansprüche

1. Videocodierverarbeitungsverfahren, das auf eine elektronische Vorrichtung angewendet wird, mit:
Bestimmen (S101) eines zu codierenden Makroblocks in einem zu codierenden Videoframe;
Erhalten (S102) von Inter-Frame-Codierungskosten des zu codierenden Makroblocks unter Verwendung mindestens eines Inter-Frame-Codierungsmodus, wobei die Anzahl des mindestens einen Inter-Frame-Codierungsmodus geringer ist als die Gesamtzahl der Inter-Frame-Codierungsmodi, wobei die Codierungskosten, die dem mindestens einen Inter-Frame-Codierungsmodus entsprechen, Prädiktionsfehlerinformationen sind, die unter Verwendung eines codierten Videoframes und des zu codierenden Videorahmens erhalten sind;
Erhalten (S103) von Intra-Frame-Codierungskosten des zu codierenden Makroblocks unter Verwendung mindestens eines Intra-Frame-Codierungsmodus, wobei die Anzahl des mindestens einen Intra-Frame-Codierungsmodus geringer ist als die Gesamtzahl der Intra-Frame-Codierungsmodi, wobei die Codierungskosten, die dem mindestens einen Intra-Frame-Codierungsmodus entsprechen, Prädiktionsfehlerinformationen sind, die durch Verwendung eines codierten Makroblocks in dem zu codierenden Videoframe und dem zu codierenden Videobild erhalten sind;
Vergleichen (S104) der Inter-Frame-Codierungskosten mit den Intra-Frame-Codierungskosten, um ein Vergleichsergebnis zu erhalten;
Bestimmen (S105) eines Codierschemas des zu codierenden Makroblocks auf der Grundlage des Vergleichsergebnisses, wobei das Codierschema Intra-Frame-Prädiktionscodierung und Inter-Frame-Prädiktionscodierung umfasst; und
Codieren (S106) des zu codierenden Makroblocks gemäß dem Codierungsschema,
wobei das Bestimmen eines Codierschemas des zu codierenden Makroblocks basierend auf dem Vergleichsergebnis umfasst:
Erhalten von Codierschemata von K benachbarten codierten Makroblöcken des zu codierenden Makroblocks, wobei K eine positive ganze Zahl ist,
Erhalten, basierend auf dem Vergleichsergebnis und den Codierschemata der K benachbarten codierten Makroblöcke, einer Wahrscheinlichkeit der Durchführung der Intra-Frame-Prädiktionscodierung auf dem zu codierenden Makroblock und einer Wahrscheinlichkeit der Durchführung der Inter-Frame-Vorhersagecodierung auf dem zu codierenden Makroblock, umfassend:
in einem Fall, in dem das Vergleichsergebnis anzeigt, dass die Intra-Frame-Codierungskosten größer sind als A multipliziert mit den Inter-Frame-Codierungskosten, Setzen der Wahrscheinlichkeit der Inter-Frame-Prädiktionscodierung auf einen ersten voreingestellten Wert, und Bestimmen der Wahrscheinlichkeit der Intra-Frame-Prädiktionscodierung auf der Grundlage einer Position des zu codierenden Makroblocks in dem zu codierenden Videoframe und der Codierschemata der K benachbarten codierten Makroblöcke, wobei A ein Koeffizient ist, der größer als ein erster Wert ist, und der erste Wert größer als oder gleich 1 ist, und
in einem Fall, in dem das Vergleichsergebnis anzeigt, dass die Inter-Frame-Codierungskosten größer sind als B multipliziert mit den Intra-Frame-Codierungskosten, Setzen der Wahrscheinlichkeit der Intra-Frame-Prädiktionscodierung auf einen zweiten voreingestellten Wert, und Bestimmen der Wahrscheinlichkeit der Inter-Frame-Prädiktionscodierung basierend auf einer Position des zu codierenden Makroblocks in dem zu codierenden Videoframe und den Codierungsschemata der K benachbarten codierten Makroblöcke, wobei B ein Koeffizient ist, der größer ist als ein zweiter Wert, und der zweite Wert größer oder gleich 1 ist,
Bestimmung des Codierungsschemas des zu codierenden Makroblocks auf der Grundlage der Wahrscheinlichkeit der Intra-Frame-Prädiktionscodierung und der Wahrscheinlichkeit der Prädiktionscodierung Inter-Frame-Prädiktionscodierung.

2. Videocodierungsverarbeitungsverfahren nach Anspruch 1, wobei das Bestimmen der Wahrscheinlichkeit der Intra-Frame-Prädiktionscodierung auf der Grundlage einer Position des zu codierenden Makroblocks in dem zu codierenden Videobild und der Codierungsschemata der K benachbarten codierten Makroblöcke umfasst:
Setzen der Wahrscheinlichkeit der Intra-Frame-Prädiktionscodierung auf einen dritten voreingestellten Wert für den Fall, dass sich der zu codierende Makroblock an einem Rand des zu codierenden Videobildes befindet; und
Setzen der Wahrscheinlichkeit der Intra-Frame-Prädiktionscodierung auf einen vierten voreingestellten Wert für den Fall, dass sich der zu codierende Makroblock nicht am Rand des zu codierenden Videobildes befindet und die Anzahl der codierten Makroblöcke, deren Codierungsschemata die Intra-Frame-Prädiktionscodierung sind, unter den K benachbarten codierten Makroblöcken kleiner als ein dritter Wert ist.

3. Videocodierungsverarbeitungsverfahren nach Anspruch 2, wobei das Bestimmen der Wahrscheinlichkeit der Intra-Frame-Prädiktionscodierung auf der Grundlage einer Position des zu codierenden Makroblocks in dem zu codierenden Videobild und der Codierungsschemata der K benachbarten codierten Makroblöcke weiterhin umfasst:
Setzen der Wahrscheinlichkeit der Intra-Frame-Prädiktionscodierung auf den zweiten voreingestellten Wert in dem Fall, dass sich der zu codierende Makroblock nicht am Rand des zu codierenden Videobildes befindet und die Anzahl der codierten Makroblöcke, deren Codierungsschemata die Intra-Frame-Prädiktionscodierung sind, unter den K benachbarten codierten Makroblöcken größer oder gleich dem dritten Wert ist.

4. Videocodierverarbeitungsverfahren nach Anspruch 3, wobei das Codierschema ferner umfasst: gleichzeitiges Durchführen der Intra-Frame-Prädiktionscodierung und der Inter-Frame-Prädiktionscodierung; oder zuerst Durchführen der Inter-Frame-Prädiktionscodierung und dann Bestimmen, basierend auf einem Ergebnis der Inter-Frame-Prädiktionscodierung, ob die Intra-Frame-Prädiktionscodierung durchzuführen ist; und
in einem Fall, in dem die Wahrscheinlichkeit der Inter-Frame-Prädiktionscodierung der erste voreingestellte Wert ist, das Bestimmen des Codierschemas des zu codierenden Makroblocks basierend auf der Wahrscheinlichkeit der Intra-Frame-Prädiktionscodierung und der Wahrscheinlichkeit der Inter-Frame-Prädiktionscodierung umfasst:
Bestimmen, in einem Fall, in dem die Wahrscheinlichkeit der Intra-Frame-Prädiktionscodierung der dritte voreingestellte Wert ist, des Codierschemas des zu codierenden Makroblocks als erstes Durchführen der Inter-Frame-Prädiktionscodierung und dann Bestimmen, basierend auf einem Ergebnis der Inter-Frame-Prädiktionscodierung, ob die Intra-Frame-Prädiktionscodierung durchgeführt werden soll;
Bestimmen des Codierschemas des zu codierenden Makroblocks als Inter-Frame-Prädiktionscodierung, falls die Wahrscheinlichkeit der Intra-Frame-Prädiktionscodierung dem vierten voreingestellten Wert entspricht; und
Bestimmen des Codierschemas des zu codierenden Makroblocks als die gleichzeitige Durchführung der Intra-Frame-Prädiktionscodierung und der Inter-Frame-Prädiktionscodierung, wenn die Wahrscheinlichkeit der Intra-Frame-Prädiktionscodierung den zweiten voreingestellten Wert hat.

5. Videocodierungsverarbeitungsverfahren nach Anspruch 1, wobei das Setzen der Wahrscheinlichkeit der Interframe-Prädiktionscodierung auf der Grundlage der Position des zu codierenden Makroblocks in dem zu codierenden Videobild und der Codierungsschemata der K benachbarten codierten Makroblöcke umfasst:
Setzen der Wahrscheinlichkeit der Interframe-Prädiktionscodierung auf einen fünften voreingestellten Wert für den Fall, dass sich der zu codierende Makroblock an einem Rand des zu codierenden Videobildes befindet; und
Setzen der Wahrscheinlichkeit der Interframe-Prädiktionscodierung auf einen sechsten voreingestellten Wert für den Fall, dass sich der zu codierende Makroblock nicht am Rand des zu codierenden Videobildes befindet und die Anzahl der codierten Makroblöcke, deren Codierungsschemata die Intraframe-Prädiktionscodierung sind, unter den K benachbarten codierten Makroblöcken größer oder gleich einem vierten Wert ist.

6. Videocodierungsverarbeitungsverfahren nach Anspruch 5, wobei das Bestimmen der Wahrscheinlichkeit der Interframe-Prädiktionscodierung auf der Grundlage der Position des zu codierenden Makroblocks in dem zu codierenden Videobild und der Codierungsschemata der K benachbarten codierten Makroblöcke weiterhin umfasst:
Setzen der Wahrscheinlichkeit der Inter-Frame-Prädiktionscodierung auf den ersten voreingestellten Wert in dem Fall, dass der zu codierende Makroblock sich nicht am Rand des zu codierenden Videobildes befindet und die Anzahl der codierten Makroblöcke, deren Codierungsschemata die Intra-Frame-Prädiktionscodierung in den K benachbarten codierten Makroblöcken sind, kleiner als der vierte Wert ist.

7. Videocodierverarbeitungsverfahren nach Anspruch 6, wobei das Codierschema ferner umfasst: gleichzeitiges Durchführen der Intra-Frame-Prädiktionscodierung und der Inter-Frame-Prädiktionscodierung; oder zuerst Durchführen der Intra-Frame-Prädiktionscodierung und dann Bestimmen, basierend auf einem Ergebnis der Intra-Frame-Prädiktionscodierung, ob die Inter-Frame-Prädiktionscodierung durchzuführen ist; und
in einem Fall, in dem die Wahrscheinlichkeit der Intra-Frame-Prädiktionscodierung der zweite voreingestellte Wert ist, das Bestimmen des Codierschemas des zu codierenden Makroblocks auf der Grundlage der Wahrscheinlichkeit der Intra-Frame-Vorhersagecodierung und der Wahrscheinlichkeit der Inter-Frame-Prädiktionscodierung umfasst:
Bestimmen des Codierschemas des zu codierenden Makroblocks in einem Fall, in dem die Wahrscheinlichkeit der Inter-Frame-Prädiktionscodierung der fünfte voreingestellte Wert ist, als erstes Durchführen der Intra-Frame-Prädiktionscodierung und dann Bestimmen, basierend auf einem Ergebnis der Intra-Frame-Prädiktionscodierung, ob die Inter-Frame-Prädiktionscodierung durchgeführt werden soll;
Bestimmen des Codierschemas des zu codierenden Makroblocks als Intra-Frame-Prädiktionscodierung, falls die Wahrscheinlichkeit der Inter-Frame-Prädiktionscodierung dem sechsten voreingestellten Wert entspricht; und
Bestimmen des Codierschemas des zu codierenden Makroblocks als die gleichzeitige Durchführung der Intra-Frame-Prädiktionscodierung und der Inter-Frame-Prädiktionscodierung, wenn die Wahrscheinlichkeit der Inter-Frame-Prädiktionscodierung den ersten voreingestellten Wert hat.

8. Videocodierungsverarbeitungsverfahren nach Anspruch 1, wobei die Bestimmung eines zu codierenden Makroblocks in einem zu codierenden Videobild umfasst:
Abwärtsabtastung des zu codierenden Videobildes mit einem voreingestellten Verhältnis, um ein vorcodiertes Videobild zu erhalten;
Segmentierung des vorcodierten Videobildes in eine Vielzahl von Makroblöcken; und
Bestimmen der Vielzahl von Makroblöcken als den zu codierenden Makroblock, einen nach dem anderen.

9. Videocodierungsverarbeitungsverfahren nach Anspruch 8, wobei das Durchführen einer Abwärtsabtastung mit einem voreingestellten Verhältnis an dem zu codierenden Videobild, um ein vorcodiertes Videobild zu erhalten, umfasst:
Durchführen des Downsamplings mit dem voreingestellten Verhältnis an dem zu codierenden Videobild, um ein Ziel-Videobild zu erhalten; und
Anpassen des Ziel-Videobildes, um das vorcodierte Videobild zu erhalten, so dass eine Länge des vorcodierten Videobildes ein ganzzahliges Vielfaches einer Länge des zu codierenden Makroblocks ist, und eine Breite des vorcodierten Videobildes ein ganzzahliges Vielfaches einer Breite des zu codierenden Makroblocks ist.

10. Videocodierungsverarbeitungsvorrichtung, mit:
einem Prozessor und einem mit dem Prozessor verbundenen Speicher, wobei der Speicher maschinenlesbare Anweisungen speichert, die von dem Prozessor ausgeführt werden können, und der Prozessor die maschinenlesbaren Anweisungen ausführt, um das Verfahren nach einem der Ansprüche 1 bis 9 durchzuführen.

11. Nichtflüchtiges, computerlesbares Speichermedium, wobei das Speichermedium maschinenlesbare Anweisungen speichert und die maschinenlesbaren Anweisungen von einem Prozessor ausgeführt werden können, um das Verfahren nach einem der Ansprüche 1 bis 9 durchzuführen.

## Revendications

1. Procédé de traitement de codage vidéo, appliqué à un dispositif électronique, et comprenant :
la détermination (S101) d'un macrobloc devant être codé dans une trame vidéo devant être codée ;
l'obtention (S102) d'un coût de codage inter-trame du macrobloc devant être codé en utilisant au moins un mode de codage inter-trame, le nombre de l'au moins un mode de codage inter-trame étant inférieur au nombre total de modes de codage inter-trame, le coût de codage correspondant à l'au moins un mode de codage inter-trame étant des informations d'erreur de prédiction obtenues en utilisant une trame vidéo codée et la trame vidéo devant être codée ;
l'obtention (S103) d'un coût de codage intra-trame du macrobloc devant être codé en utilisant au moins un mode de codage intra-trame, le nombre de l'au moins un mode de codage intra-trame étant inférieur au nombre total de modes de codage intra-trame, le coût de codage correspondant à l'au moins un mode de codage intra-trame étant des informations d'erreur de prédiction obtenues en utilisant un macrobloc codé dans la trame vidéo devant être codée et la trame vidéo devant être codée ;
la comparaison (S104) du coût de codage inter-trame avec le coût de codage intra-trame, pour obtenir un résultat de comparaison ;
la détermination (S105) d'un schéma de codage du macrobloc devant être codé sur la base du résultat de comparaison, le schéma de codage comprenant un codage prédictif intra-trame et un codage prédictif inter-trame ; et
le codage (S106) du macrobloc devant être codé conformément au schéma de codage,
dans lequel la détermination d'un schéma de codage du macrobloc devant être codé sur la base du résultat de comparaison comprend :
l'obtention de schémas de codage de K macroblocs codés voisins du macrobloc devant être codé, dans lequel K est un entier positif,
l'obtention, sur la base du résultat de comparaison et des schémas de codage des K macroblocs codés voisins, d'une probabilité de réalisation du codage prédictif intra-trame sur le macrobloc devant être codé et d'une probabilité de réalisation du codage prédictif inter-trame sur le macrobloc devant être codé, comprenant :
dans un cas où le résultat de comparaison indique que le coût de codage intra-trame est supérieur à A multiplié par le coût de codage inter-trame, la définition de la probabilité du codage prédictif inter-trame sur une première valeur prédéfinie, et la détermination de la probabilité du codage prédictif intra-trame sur la base d'un emplacement du macrobloc devant être codé dans la trame vidéo devant être codée et des schémas de codage des K macroblocs codés voisins, dans lequel A est un coefficient supérieur à une première valeur, et la première valeur est supérieure ou égale à 1, et
dans un cas où le résultat de comparaison indique que le coût de codage inter-trame est supérieur à B multiplié par le coût de codage intra-trame, la définition de la probabilité du codage prédictif intra-trame sur une deuxième valeur prédéfinie, et la détermination de la probabilité du codage prédictif inter-trame sur la base d'un emplacement du macrobloc devant être codé dans la trame vidéo devant être codée et des schémas de codage des K macroblocs codés voisins, dans lequel B est un coefficient supérieur à une deuxième valeur, et la deuxième valeur est supérieure ou égale à 1,
la détermination du schéma de codage du macrobloc devant être codé sur la base de la probabilité du codage prédictif intra-trame et de la probabilité du codage prédictif inter-trame.

2. Procédé de traitement de codage vidéo selon la revendication 1, dans lequel la détermination de la probabilité du codage prédictif intra-trame sur la base d'un emplacement du macrobloc devant être codé dans la trame vidéo devant être codée et des schémas de codage des K macroblocs codés voisins comprend :
la définition de la probabilité du codage prédictif intra-trame sur une troisième valeur prédéfinie dans un cas où le macrobloc devant être codé est situé à un bord de la trame vidéo devant être codée ; et
la définition de la probabilité du codage prédictif intra-trame sur une quatrième valeur prédéfinie dans un cas où le macrobloc devant être codé n'est pas situé au bord de la trame vidéo devant être codée et le nombre de macroblocs codés dont les schémas de codage sont le codage prédictif intra-trame parmi les K macroblocs codés voisins est inférieur à une troisième valeur.

3. Procédé de traitement de codage vidéo selon la revendication 2, dans lequel la détermination de la probabilité du codage prédictif intra-trame sur la base d'un emplacement du macrobloc devant être codé dans la trame vidéo devant être codée et des schémas de codage des K macroblocs codés voisins comprend en outre :
la définition de la probabilité du codage prédictif intra-trame sur la deuxième valeur prédéfinie dans un cas où le macrobloc devant être codé n'est pas situé au bord de la trame vidéo devant être codée et le nombre de macroblocs codés dont les schémas de codage sont le codage prédictif intra-trame parmi les K macroblocs codés voisins est supérieur ou égal à la troisième valeur.

4. Procédé de traitement de codage vidéo selon la revendication 3, dans lequel le schéma de codage comprend en outre : la réalisation de manière simultanée du codage prédictif intra-trame et du codage prédictif inter-trame ; ou tout d'abord la réalisation du codage prédictif inter-trame et ensuite la détermination, sur la base d'un résultat du codage prédictif inter-trame, s'il faut réaliser le codage prédictif intra-trame ; et
dans un cas où la probabilité du codage prédictif inter-trame est la première valeur prédéfinie, la détermination du schéma de codage du macrobloc devant être codé sur la base de la probabilité du codage prédictif intra-trame et de la probabilité du codage prédictif inter-trame comprend :
la détermination, dans un cas où la probabilité du codage prédictif intra-trame est la troisième valeur prédéfinie, du schéma de codage du macrobloc devant être codé comme tout d'abord la réalisation du codage prédictif inter-trame et ensuite la détermination sur la base d'un résultat du codage prédictif inter-trame, s'il faut réaliser le codage prédictif intra-trame ;
la détermination, dans un cas où la probabilité du codage prédictif intra-trame est la quatrième valeur prédéfinie, du schéma de codage du macrobloc devant être codé comme le codage prédictif inter-trame ; et
la détermination, dans un cas où la probabilité du codage prédictif intra-trame est la deuxième valeur prédéfinie, du schéma de codage du macrobloc devant être codé comme la réalisation de manière simultanée du codage prédictif intra-trame et du codage prédictif inter-trame.

5. Procédé de traitement de codage vidéo selon la revendication 1, dans lequel la détermination de la probabilité du codage prédictif inter-trame sur la base de l'emplacement du macrobloc devant être codé dans la trame vidéo devant être codée et des schémas de codage des K macroblocs codés voisins comprend :
la définition de la probabilité du codage prédictif inter-trame sur une cinquième valeur prédéfinie dans un cas où le macrobloc devant être codé est situé à un bord de la trame vidéo devant être codée ; et
la définition de la probabilité du codage prédictif inter-trame sur une sixième valeur prédéfinie dans un cas où le macrobloc devant être codé n'est pas situé au bord de la trame vidéo devant être codée et le nombre de macroblocs codés dont les schémas de codage sont le codage prédictif intra-trame parmi les K macroblocs codés voisins est supérieur ou égal à une quatrième valeur.

6. Procédé de traitement de codage vidéo selon la revendication 5, dans lequel la détermination de la probabilité du codage prédictif inter-trame sur la base de l'emplacement du macrobloc devant être codé dans la trame vidéo devant être codée et des schémas de codage des K macroblocs codés voisins comprend en outre :
la définition de la probabilité du codage prédictif inter-trame sur la première valeur prédéfinie dans un cas où le macrobloc devant être codé n'est pas situé au bord de la trame vidéo devant être codée et le nombre de macroblocs codés dont les schémas de codage sont le codage prédictif intra-trame dans les K macroblocs codés voisins est inférieur à la quatrième valeur.

7. Procédé de traitement de codage vidéo selon la revendication 6, dans lequel le schéma de codage comprend en outre : la réalisation de manière simultanée du codage prédictif intra-trame et du codage prédictif inter-trame ; ou tout d'abord la réalisation du codage prédictif intra-trame et ensuite la détermination, sur la base d'un résultat du codage prédictif intra-trame, s'il faut réaliser le codage prédictif inter-trame ; et
dans un cas où la probabilité du codage prédictif intra-trame est la deuxième valeur prédéfinie, la détermination du schéma de codage du macrobloc devant être codé sur la base de la probabilité du codage prédictif intra-trame et de la probabilité du codage prédictif inter-trame comprend :
la détermination, dans un cas où la probabilité du codage prédictif inter-trame est la cinquième valeur prédéfinie, du schéma de codage du macrobloc devant être codé comme tout d'abord la réalisation du codage prédictif intra-trame et ensuite la détermination, sur la base d'un résultat du codage prédictif intra-trame, s'il faut réaliser le codage prédictif inter-trame ;
la détermination, dans un cas où la probabilité du codage prédictif inter-trame est la sixième valeur prédéfinie, du schéma de codage du macrobloc devant être codé comme le codage prédictif intra-trame ; et
la détermination, dans un cas où la probabilité du codage prédictif inter-trame est la première valeur prédéfinie, du schéma de codage du macrobloc devant être codé comme la réalisation de manière simultanée du codage prédictif intra-trame et du codage prédictif inter-trame.

8. Procédé de traitement de codage vidéo selon la revendication 1, dans lequel la détermination d'un macrobloc devant être codé dans une trame vidéo devant être codée comprend :
la réalisation d'un sous-échantillonnage à un rapport défini sur la trame vidéo devant être codée, pour obtenir une trame vidéo précodée ;
la segmentation de la trame vidéo précodée en une pluralité de macroblocs ; et
la détermination de la pluralité de macroblocs comme le macrobloc devant être codé un par un.

9. Procédé de traitement de codage vidéo selon la revendication 8, dans lequel la réalisation d'un sous-échantillonnage à un rapport prédéfini sur la trame vidéo devant être codée pour obtenir une trame vidéo précodée comprend :
la réalisation du sous-échantillonnage au rapport prédéfini sur la trame vidéo devant être codée, pour obtenir une trame vidéo cible ; et
le réglage de la trame vidéo cible, pour obtenir la trame vidéo précodée, de telle sorte qu'une longueur de la trame vidéo précodée soit un entier multiple d'une longueur du macrobloc devant être codé, et une largeur de la trame vidéo précodée soit un entier multiple d'une largeur du macrobloc devant être codé.

10. Appareil de traitement de codage vidéo, comprenant :
un processeur et une mémoire connectée au processeur, la mémoire stockant des instructions lisibles par machine exécutables sur le processeur, et le processeur exécutant les instructions lisibles par machine pour réaliser le procédé selon l'une quelconque des revendications 1 à 9.

11. Support de stockage non volatil lisible par ordinateur, le support de stockage stockant des instructions lisibles par machine, et les instructions lisibles par machine étant capables d'être exécutées par un processeur pour réaliser le procédé selon l'une quelconque des revendications 1 à 9.
